# EUROPEAN PATENT APPLICATION

(11) **EP 1 473 949 A2**
(43) Date of publication of application: **03.11.2004**
(21) Application number: 04250660.0
(22) Date of filing: 06.02.2004
(51) Int. Cl.: H04Q 7/22, H04Q 7/38, H04L 29/06

(54) **Provision of a content delivery service to a user in a messaging system according to the user identification information**

(30) Priority: 06.02.2003 JP 2003029779
(71) Applicant: FUJITSU LIMITED, Kawasaki-shi, Kanagawa 211-8588 (JP)
(72) Inventor: Ushiki, Kazumasa c/o Fujitsu Limited, Kawasaki-shi, Kanagawa 211-8588 (JP); Fukazawa, Mitsunori Fujitsu Limited, Kawasaki-shi, Kanagawa 211-8588 (JP); Nomura, Yuji Fujitsu Limited, Kawasaki-shi, Kanagawa 211-8588 (JP); Igarashi, Yoichiro Fujitsu Limited, Kawasaki-shi, Kanagawa 211-8588 (JP)
(74) Representative: Stebbing, Timothy Charles

(57) **Abstract**

A wireless tag 1 carried by a user sends a user ID stored in an internal memory to a terminal 21 with wireless signals. The terminal 21 sends the user ID from the wireless tag 1 to a messaging server 3. The messaging server 3 relates the user ID with the content (acquired from a content server 4) desired by the user of the user ID, stores them and delivers to the terminal 21 the content corresponding to the user ID from the terminal 21. The terminal 21 outputs the delivered content to a display unit and so on. The wireless tag 1 moves depending on the movement of the user, the user ID is sent to the messaging server 3 from a terminal 2i where the user has moved, and the content is delivered to the terminal 2i. In this way, the user can receive the delivery of the content with the terminal where the user has moved.

## Description

The present invention relates to a messaging system which sends information, content, etc., desired by a user to a terminal in the vicinity of the user depending on the movement of the user. Also, the invention relates to a messaging server, a terminal, a content sending server and a home agent server, which are included in the messaging system.

UPT (Universal Personal Telecommunication) service may be typical of a service which dynamically changes destinations of voice communication depending on movement of a user. In UPT service, when the terminal (telephone and the like) used for the voice communication is changed along with the movement of the user, the user conducts an operation to register the terminal to be used in the place where the user has moved to. As this registration operation, it is assumed that the user manipulates a dial or push-buttons of the terminal (telephone) to register the terminal, or the user conducts an operation such as having his own ID card read by a card reader and the like.

To improve access to content available on the Internet for example, a "pseudo-push" type service has been proposed which notifies a user of content (information) updating and prompts the user to refer to the updated content. In the pseudo-push type service, the service is configured to notify the user's terminal that content of a website etc has been updated. In other words, if the user registers into a server the URL (Uniform Resource Locator) of a server which provides the content which the user likes to access (receive), the server will check whether the contents have been updated or not, one or more times a day (for example, four times), and if updated, the server will notify the terminal of the fact that the website has been updated. The user will acquire new content from the server according to the notification.

Further, as an information providing apparatus utilizing a mobile communication network which provides information to a mobile communication terminal, an information providing apparatus may be quoted, which allows a small highly transportable mobile communication terminal to acquire and output multimedia information from and to the server connected to a wireless communication network or external information communication network (for example, see International Publication No. W097/14244).

In this information providing apparatus,the mobile communication terminal is provided with means for telephone communication and means for a man-machine interface. Also, the server for the mobile communication terminal is provided with a database storing the multimedia information, means for external communication which receives the multimedia information from the network servers, means for data processing which process or convert the multimedia information and means for transfer which transfer the multimedia information to the mobile communication terminal.

Further, as a system which enhances convenience of CATV service, the wireless providing system for CATV service may be quoted, which provides CATV on wireless communication (for example, see Japanese Patent Application Laid-open Pub. No. 2001-103446).

Further, as a system which automatically executes user authentication using a wireless tag, the user authentication system may be quoted, which, in a room or field environment where a plurality of terminals (personal computers) with standard specification are located, by communicating with the wireless tag which is carried by the user, automatically conducts initialization and user authentication of the approaching (next to be used) terminal and provides a work environment corresponding to the user (for example, see Japanese Patent Application Laid-open Pub. X10. 2002-157040).

However, in UPT service, the registration operation of the terminal which should be conducted by the user is troublesome. Also, in the case of using a device such as the card reader, since the size of the device itself is large there are a limited number of communication terminals which can be equipped with it, and problems in dissemination of the service can occur. Further, in UPT service, the target is voice communication only, and data communication including images and the like is not considered.

In pseudo-push type service, since such a type of usage is not assumed that the terminal used by the user changes dynamically along with, for example, movement of the user, flexible terminal registration operation is not considered. Also, it is not taken into consideration to display information content corresponding to the functions (ability) of the user's terminal.

The present invention was conceived in view of this background. It is therefore desirable to provide a messaging system which can send a variety of content or information desired by a user, such as text, image, video and the like, to a terminal in the vicinity of the user, depending on the movement of the user.

It is also desirable to simplify the user registration operation with the terminal.

It is further desirable to provide a messaging system which can convert information/data content according to abilities and characteristics (formats) of a terminal and which can deliver suitably-formatted content to the terminal.

According to a first aspect of the present invention there is provided a messaging system comprising a messaging server delivering content; and a terminal used by a user, wherein the terminal sends user identification information about the user using the terminal to the messaging server and receives content delivered from the messaging server, and wherein the messaging server holds (stores) correspondingly the user identification information of the user to whom a content delivery service is provided and the content desired by the user, the messaging server delivering to the terminal the content corresponding to the user identification information sent from the terminal.

According to the above aspect, the terminal used by a user sends user identification information of the user to the messaging server. The messaging server holds the user identification information of the user to whom content delivery service is provided and content (text data, image data, video data, voice data, music etc) which is desired by the user and which are related with the user identification information, and delivers to the terminal the content corresponding to the user identification information sent from the terminal. The terminal receives contents delivered from the messaging server. Therefore, even if the user has moved, by the terminal located in the vicinity of the user transmitting the user identification information of the user to the messaging server, the terminal receives content desired by the user. The received content is, for example, displayed by a display device, output from speakers as sound or stored in a memory device. Thus, even if the user has moved, the user can receive the delivery of content with the terminal where the user has moved to.

Preferably, by wirelessly communicating with a wireless tag which is carried by a user and which stores user identification information of the user, the terminal reads the user identification information from the wireless tag and sends the read user identification information to the messaging server. Thus, registration operation of the user (user identification information) into the terminal is simplified.

According to a second aspect of the present invention there is provided a messaging system comprising a terminal used by a user; a content sending server; a home agent server; and a home agent address management server, wherein the terminal sends user identification information of a user using the terminal to the home agent address management server, the terminal receives an address or user identification information of the home agent server returned from the home agent address management server, the terminal sends the user identification information to the home agent server accommodating (hosting) the terminal based on the received address or user identification information of the home agent server, the terminal receives the content delivered from the home agent server, and wherein the home agent address management server holds corresponding user identification information of the user to whom a content delivery service is provided and an address or identification information of the home agent server accommodating the user, the home agent address management server returning to the terminal an address or identification information of the home agent server corresponding to the user identification information sent from the terminal, wherein the content sending server holds a content and sends the held content to the home agent server accommodating the user to whom the content is delivered, and wherein the home agent server receives the content sent from the content sending server and delivers to the terminal the content corresponding to user identification information sent from the terminal.

According to the above aspect, the terminal used by the user sends user identification information of the user using the terminal to a home agent address management server. The home agent address management server holds the user identification information of the user who receives the content delivery service and address or identification information, which is related with the user identification information, of the home agent server which includes (accommodates) the user. Then, the home agent address management server returns, to the terminal, the address or identification information of the home agent server corresponding to the user identification information sent from the terminal. The terminal receives the address or identification information of the home agent server returned from the home agent address management server, and based on the address or identification information of the home agent server received, sends the user identification information to the home agent server which accommodates the terminal. A content sending server holds content and sends the held content to the home agent server which accommodates the user to whom the content is delivered. The home agent server receives the content sent from the content sending server, and sends to the terminal the content corresponding to the user identification information sent from the terminal. The terminal receives the content delivered from the home agent server.

According to this aspect of the present invention, even if the user has moved, by the terminal located in the vicinity of the user transmitting the user identifier of the user to the home agent server, the terminal receives content desired by the user. In this way, even if the user has moved, the user can receive the delivery service of content with the terminal where the user has moved to.

According to a third aspect of the present invention there is provided a messaging server comprising a memory unit which holds (stores) corresponding user identification information of a user to whom a content (information) delivery service is provided and a content (data) desired by the user; a reception unit which receives user identification information sent from a terminal used by the user; and a delivery unit which reads out from the memory unit a content corresponding to the user identification information received by the reception unit, the delivery unit delivering the read content to the terminal.

According to a fourth aspect of the present invention there is provided a terminal used by a user to whom a content delivery service is provided, and which receives delivered content, the terminal comprising a transmission unit which transmits user identification information of the user using the terminal to a messaging server which delivers content (to the terminal); a reception unit which receives from the messaging server the content corresponding to user identification information sent from the transmission unit; and a processing unit which executes processes, including display, audio output and storage, for the content received by the reception unit.

According to a fifth aspect of the present invention there is provided a terminal used by a user to whom the content delivery service is provided, and which receives content delivered, the terminal comprising a first transmission unit which transmits user identification information of the user using the terminal to a home agent address management server which manages an address of a home agent server delivering the content; a first reception unit which receives from the home agent address management server an address or identification information of a home agent server corresponding to the user identification information sent from the first transmission unit; a second transmission unit which transmits the user identification information to the home agent server based on the address or identification information of a home agent server which is received by the first reception unit; a second reception unit which receives from the home agent server the content corresponding to the user identification information sent from the second transmission unit; and a processing unit which executes processes, including display, audio output and storage, for the content received by the second reception unit.

According to a sixth aspect of the present invention there is provided a content sending server comprising a memory unit which stores corresponding user identification information-of a user to whom content delivery service is provided and content (information) desired by the user; and a content sending unit which accommodates the user corresponding to the user identification information, the content sending unit sending the content corresponding to the user identification information to a home agent server which sends the content desired by the user having the user identification information to the terminal that has sent the user identification information.

According to a seventh aspect of the present invention there is provided a home agent server accommodating (hosting) a user and which delivers content desired by the user to a terminal used by the user, the home agent server comprising a user identification information reception unit (used by a user and) which receives user identification information of the user sent from the terminal which receives the content; a content reception unit which receives the content corresponding to the user identification information which is sent from a content sending server; and a forwarding unit which forwards the content received by the content reception unit to the terminal.

The above aspects of the invention enable the efficient transfer of data between appliances, improving communication and targeting data to the most appropriate output device.

The above and other features and advantages of the present invention will become more apparent from the following detailed description when taken in conjunction with the accompanying drawings, in which:
Fig. 1 is a block diagram showing the overall configuration of a messaging system according to a first embodiment of the present invention;
Fig. 2 is a block diagram-showing the configuration of a terminal;
Fig. 3 is a block diagram showing the configuration of a messaging server;
Figs. 4A and 4B illustrate examples of a user content management table, with Fig. 4A showing the table before distributing contents and Fig. 4B showing the table after distributing contents;
Figs. 5A and 5B illustrate examples of a content management table, with Fig. 5A showing the table before generating a file whose content format is converted and Fig. 5B showing the table after generating the file whose content format is converted;
Figs. 6A and 6B illustrate examples of a terminal management table, with Fig. 6A showing the table before changing the terminal address and Fig. 6B showing the table after changing the terminal address;
Fig. 7 is a sequence diagram showing the flow of processes effected by the messaging system;
Fig. 8 is a flowchart showing the tag information readout flow of step S2 in Fig. 7;
Fig. 9 is a flowchart showing the flow of the content acquisition process of step S4 in Fig. 7;
Fig. 10 is a flowchart showing the flow of the content distribution process of step S5 in Fig. 7;
Fig. 11 is a flowchart showing the registration deletion request sending flow of step S6 in Fig. 7;
Fig. 12 is a sequence diagram showing the flow of processes effected by the messaging system according to the first embodiment of the present invention;
Fig. 13 illustrates an example of the terminal management table;
Fig. 14 is a flowchart showing the flows of tag information readout and of registration deletion request sending in cases where the terminal registration process and the registration deletion process are automatically carried out;
Fig. 15 is a sequence diagram showing content distribution processes via voice call protocol to a car navigation system; Fig. 16 is a sequence diagram showing the content distribution to a plurality of terminals in case of the multi-mode;
Fig. 17 illustrates an example of the terminal management table of the user in the multi-mode;
Fig. 18 is a block diagram showing the general configuration of the messaging system according to a second embodiment of the present invention;
Fig. 19 illustrates an example of a messaging server address management table;
Fig. 20 is a sequence diagram showing the flow of processes effected by the messaging system according to the second embodiment of the present invention;
Fig. 21 is a block diagram showing the general configuration of the messaging system according to a third embodiment of the present invention;
Fig. 22 illustrates an example of a user content management table retained by a content sending server;
Fig. 23 illustrates an example of a terminal management table retained by an HA server;
Fig. 24 illustrates an example of an HA address management table retained by an HA address management server;
Fig. 25 is a sequence diagram showing the flow of processes effected by the messaging system according to the third embodiment of the present invention; and
Fig. 26 is a sequence diagram in cases where the same content is distributed to a plurality of users accommodated in the same HA server.

In the following description the term "contents" refers to any kind of content capable of being delivered to a user.

### <First Embodiment>

### [Configuration of the Messaging System]

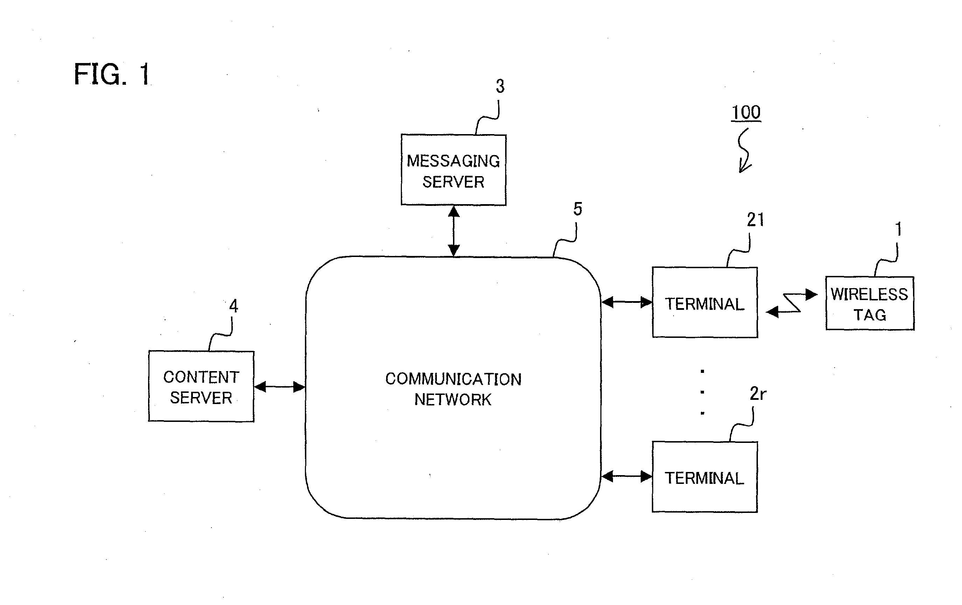

Fig. 1 is a block diagram showing overall configuration of a messaging system 100 according to the first embodiment of the present invention.

The messaging system 100 has a wireless tag 1 carried by a user, as well as plural (r: r is integer more than 1) terminals 21 to 2r which are connected to a communication network 5 and can communicate with each other, a messaging server 3 and a content server 4. In some cases, a plurality of the messaging servers 3 may be provided for the purpose of load sharing. Also, in some cases, a plurality of the content servers 4 may be provided, and in this case, each content server may store different contents. The communication network 5 consists of, for example, Internet, LAN, mobile communication network and the like.

Before describing details of these components of the messaging system 100, general outline of content delivery service (messaging service) provided by this messaging service 100 is described.

The messaging service provided by the messaging service 100 is the service such that if the user has moved between the terminals, contents desired by the user are automatically delivered to the terminal where the user has moved to. This service is provided as follows.

First, the subscribed user of the messaging service is given the wireless tag 1 storing tag information, such as user identifier (user ID), from the service provider. When a user subscribes to (joins) the service, the user advises the service provider about what contents are preferred to be received under what conditions. The service provider registers an address and the delivery condition of the content server (content server 4) into the messaging server 3, according to the application.

After subscription to the service, when the user carrying the wireless tag 1 approaches one of the terminals 21 to 2r (assumed as the terminal 21), the terminal 21 wirelessly communicates with the wireless tag 1, and reads tag information stored in the wireless tag 1 by wireless communication. Then, the terminal 21 sends to the messaging server 3 the user ID, information of the terminal 21 and the like contained in the tag information.

The messaging server 3 reads out contents from the content server 4 storing contents desired by the user based on the information sent from the terminal 21, and delivers the read out contents to the terminal 21. In this way, the user can acquire desired contents (data, information) on the terminal 21 to which the user has moved.

In this way, in the messaging service according to the embodiment, even if the user has moved, contents desired by the user are automatically delivered to the terminal where the user has moved.

Next, details of each component of the messaging system 100 are described.

The wireless tag 1 is provided with internal memory (such as ROM and flash memory), and in this internal memory, tag information is stored. The tag information includes the user identifier (user ID) and the identifier of the messaging server 3 (messaging server ID).

If a plurality of the messaging servers is provided, out of the plurality of the messaging servers, the messaging ID for one which provides service to the user carrying the wireless tag 1 (that is, the messaging server which accommodates the user) is stored in the internal memory.

The user ID is an identifier allocated to a user by the service provider and the like when the user subscribed to the messaging service, and is information to uniquely distinguish the user from other users. As the user ID, for example, NAI (Network Access Identifier) defined by IETF (Internet Engineering Task Force) may be used.

The messaging server ID is information to uniquely identify the messaging server. As the messaging server ID, for example, FQDN (Fully Qualified Domain Name) may be used. It is to be noted that, if only one messaging server is provided, the messaging server ID can be stored in the terminals 21 to 2r, and in this case, the messaging server ID may not be included in the tag information.

The wireless tag 1 wirelessly communicates with a device (assumed as the terminal 2i (i is any of 1 to r)) which is present within a predetermined distance (for example, several tens of centimeters or several meters), and sends to the terminal 2i the tag information stored in the internal memory. The wireless tag 1 may be one which has a built-in power source supplying electric power for wireless communication, or may be one which has no built-in power source and has circuits generating electric power with wireless signals from the terminal 2i.

By the way, if two or more terminals are present within a predetermined distance, the wireless tag 1 may wirelessly communicate with these two or more terminals, and may send the tag information to the two or more terminals.

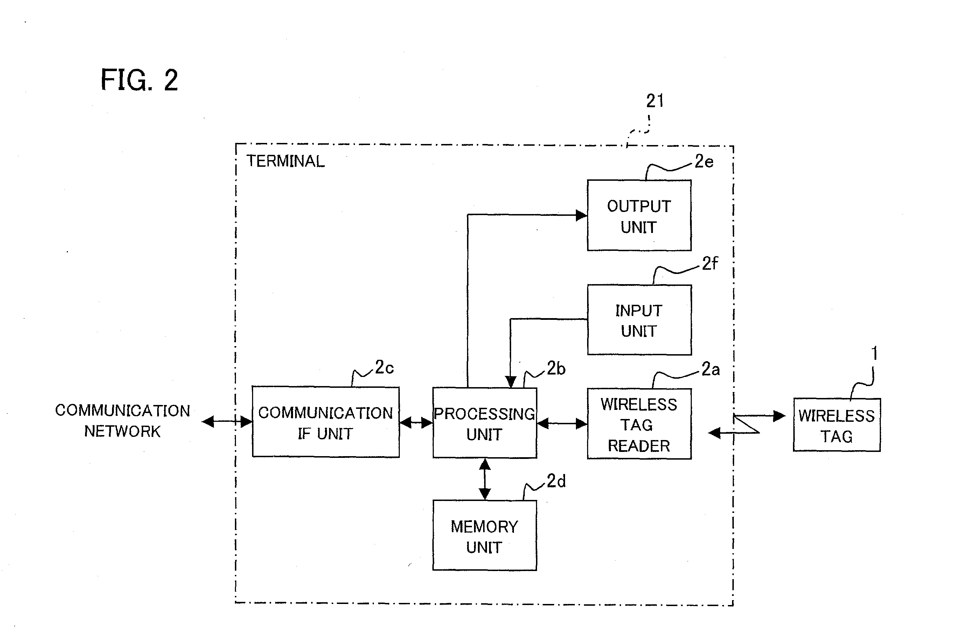

The terminals 21 to 2r may be personal computers, PDAs, kiosk terminals, car navigation systems and the like used by a user. The terminals 21 to 2r have differences between these personal computers, PDAs, kiosk terminals, car navigation systems and the like, but have the same configuration for realizing functions related to the present invention. Fig. 2 is a block diagram showing configuration of the terminal 21 as the representation of the terminal 21 to 2r. The terminal 21 has a wireless tag reader 2a, a processing unit 2b, a communication interface unit (communication IF unit) 2c, a memory unit 2d, an output unit 2e and an input unit 2f.

The wireless tag reader 2a wirelessly communicates with the wireless tag 1, and reads (receives) the tag information stored in the internal memory of the wireless tag 1. The read tag information is given to the processing unit 2b, and stored in the memory unit 2d (RAM and the like) by the processing unit 2b.

In the memory unit 2d, a terminal identifier (terminal ID), a terminal address and content format of the terminal 21 are stored in advance.

The terminal ID is information to uniquely distinguish the terminal 21 from other terminals. If the terminal 21 is a mobile communication terminal supporting MobileIP, a home address may be used as the terminal ID, for example.

The terminal address is an address of the terminal 21 in the communication network 5. For example, IP address may be used as the terminal address. Also, if the terminal 21 is a mobile communication terminal supporting MobileIP, a home address or a care-of-address may be used as the terminal address, for example. In this case, if the terminal 21 is present on the home network, the terminal address will have the home address, and if the terminal 21 is present on the foreign network, the terminal address will have the care-of-address. And, contents sent to the home address can be forwarded to the care-of-address on the home network.

The content format represents the format of data contents which can be output (for example, visual or audio output) to the output unit 2e of the terminal 21. For example, the content format is text if the output unit 2e of the terminal 21 is a display unit which can display only text. The content format may include file format such as PDF format and HTML format, audio format or data indicating the size of screen display (horizontal and vertical resolutions).

If the tag information is sent from the wireless tag 1, this tag information is also stored in the memory unit 2d temporarily. If this tag information becomes unnecessary, it will be deleted (erased) from the memory 2d, as stated below.

The processing unit 2b controls the wireless tag reader 2a, the communication IF unit 2c, the output unit 2e and the input unit 2f, as well as performs processes such as storing the tag information from the wireless tag reader 2a in the memory unit 2d, deleting unnecessary tag information from the memory unit 2d, registering terminals into the messaging server 3 and providing the contents sent from the messaging server 3 to users. By the way, the processing unit 2b may be achieved by hardware circuits, or may be achieved by programs or CPU running these programs.

The communication IF unit 2c performs sending and receiving operations of data from and to the communication network 5, gives data received from the communication network 5 to the processing unit 2b and sends data from the processing unit 2b to the communication network 5 (messaging server 3). Communications between the communication IF unit 2c and the communication network 5 may be wired communication or wireless communication.

The output unit 2e consists of a display unit (for example, CRT display and LCD), speakers and others, and outputs (audio-outputs, displays etc.) messages, contents and the like. The input unit 2f consists of a keyboard, a mouse, a touch panel and others, and is used by users in order to operate the terminal 21.

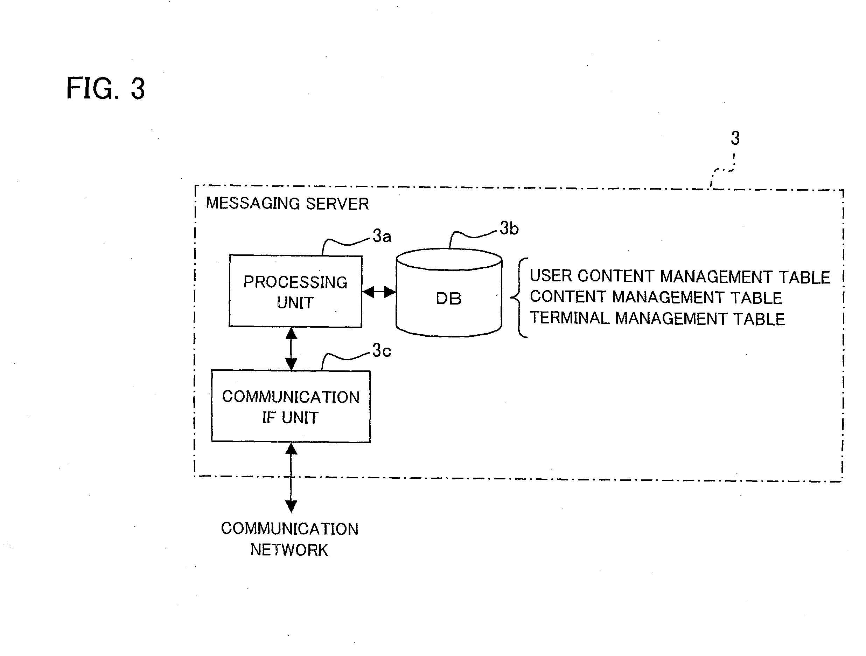

The messaging server 3 registers terminals and delivers contents from the content server 4 to registered terminals under predetermined conditions. Fig. 3 is a block diagram showing configuration of the messaging server. The messaging server 3 has a processing unit 3a, a database (DB) 3b and a communication IF unit 3c.

The DB 3b stores user content management tables, content management tables and terminal management tables, as well as contents acquired from the content server4.

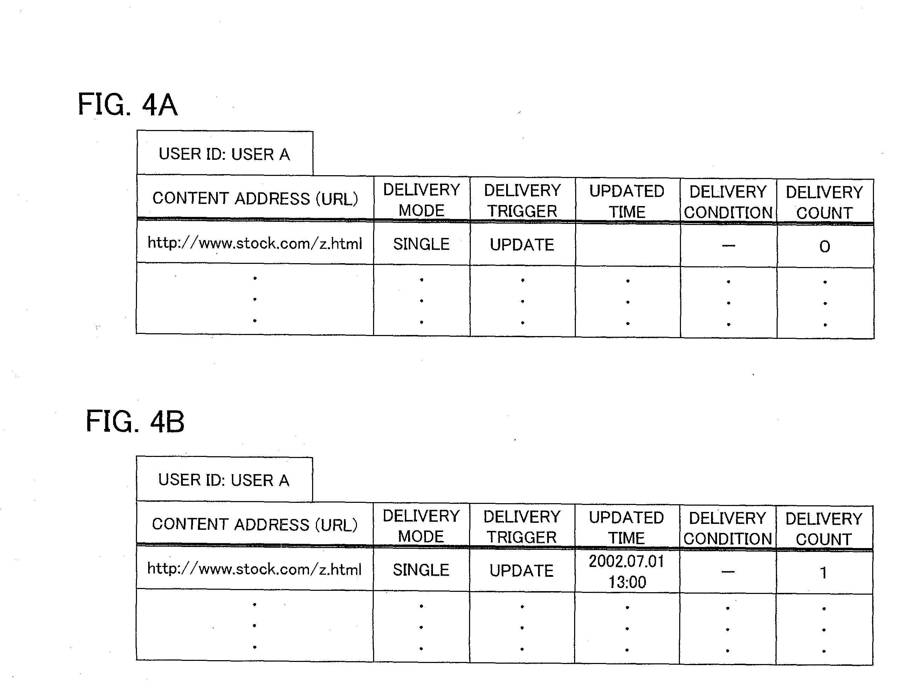

Figs. 4A and 4B show examples of the user content management table, and Fig. 4A shows the table before distributing contents and Fig. 4B shows the table after distributing contents, respectively.

The user content management table is a table which manages contents desired by a user, delivery condition of contents and delivery situation of contents, and is generated when a user subscribes to the messaging service, by the service provider or the like based on subscription information provided from the user, or after subscription, by the user through any of the terminals 2i.

The user content management table is provided with respect to each user ID, and indexed and searched by the user ID. Figs. 4A and 4B show examples of the user content management table when the user ID is user A, and if other users such as user B or user C are present, the user content management table for user B, the user content management table for user C and so on will be provided.

The user content management table has user ID, content address (URL), delivery mode, delivery trigger, updated time, delivery conditions and delivery count.

The user ID is an identifier allocated to the subscribed user, and is the same as the user ID of the tag information stated above. The content address is address indicating storage places of contents desired by users (for example, any Web page in the content server 4). As the content address, URL may be used, for example.

The delivery mode indicates whether contents addressed by the content address are delivered to a plurality of terminals (multi-mode) or single terminal (single-mode). The case of "multi-mode" is, for example, the case that contents are delivered to both the PDA carried by the user and the kiosk terminal located in vicinity of the user. In Fig. 4A, since "single-mode" is shown as the delivery mode, contents desired by the user A are delivered to single terminal only.

The delivery trigger indicates opportunity that contents are delivered to terminals. In Fig. 4A, "update" is shown as the delivery trigger, every time the contents are updated, the updated contents are delivered to the user. In addition to this, the delivery trigger can be configured such that contents are delivered hourly.

The updated time indicates the last time the contents were updated. Fig. 4A shows the user content management table before content delivery, therefore the last updated time is not displayed in the updated time field of this table, and, for example, the value such as "NULL" is filled in. On the other hand, Fig. 4B shows the user content management table after content delivery, therefore the updated time field is filled with "July 1, 2002, 13:00" which is last updated time of the delivered content.

The delivery conditions indicate under what conditions the contents desired by the user are delivered. For example, if the content is stock price information and the user wants to be delivered the content only when stock price go beyond 500 yen, "over 500 yen" is set up as the delivery condition. As shown in Figs. 4A and 4B, if the delivery conditions are not particularly set up, the contents will be delivered based only on the delivery trigger.

The delivery count indicates number of times contents are delivered to the user. As the default value of the delivery count, zero (0) is set up as shown in Fig. 4A, then the delivery count is incremented by one each time the content is delivered. Fig. 4B shows the table after the content has been delivered once, therefore the delivery count would be one (1). This delivery count is utilized in the case when the user is charged based on the number of times of delivery. Therefore, for the user to whom fixed amount is charged, like in the case of the fixed rate service, the delivery count parameter may not be provided.

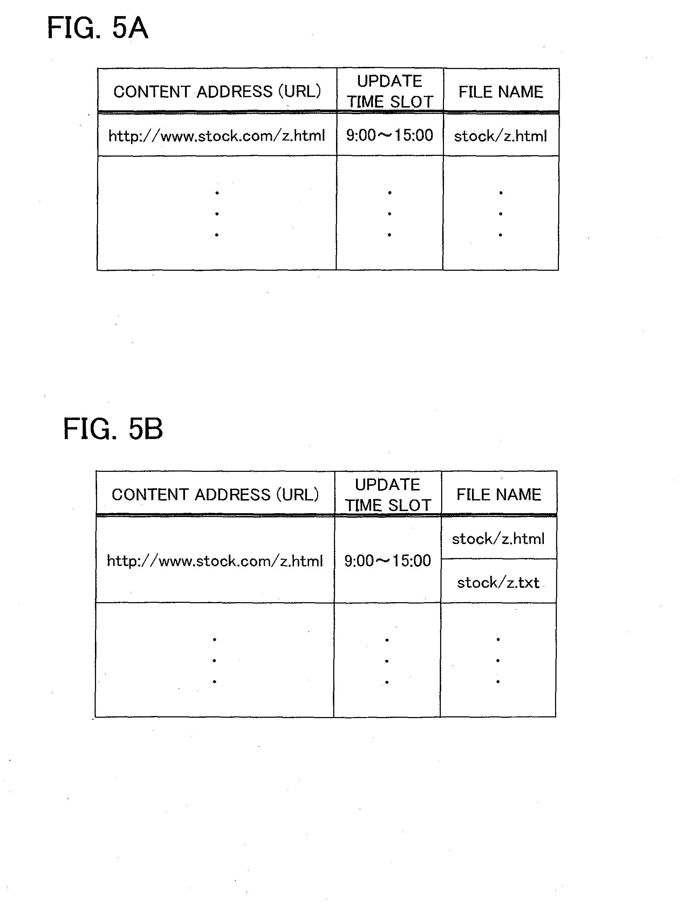

Figs. 5A and 5B show examples of the content management table, and Fig. 5A shows the table before generating the file for which content format is converted and Fig. 5B shows the table after generating the file whose content format is converted, respectively.

The content management table is a table which manages properties of contents delivered to user, file names of contents stored in messaging server 3 and the like, and are generated, when a user subscribe to the messaging service, by the service provider or the like based on subscription information provided from the user, or after subscription, by the messaging server 3 with the user's operation through the terminals 2i.

The content management table has contents address, update time slot and file name as data items.

The content address is the same as the content address of the user content management table described above in Figs. 4A and 4B.

The update time slot is one of the properties of the content, indicating the time slot when the content may be updated. For example, if the content is stock price information, then the update time slot is 9:00 to 15:00 because during that time stock trade is operated, and so these times are filled in as the update time slot.

It is to be noted that, though the update time slot is shown as the property of the contents herein, this corresponds to that the delivery triggers in Figs. 4A and 4B are "update". Therefore, if the delivery trigger is other than "update", a property other than the updated time slot is provided on the content management table.

The file name is a local file name in the messaging server 3, which is given when the contents read out from the content server are stored in DB 3b. Fig. 5A shows that the content (for example, stock price information) has been stored in DB 3b with the file name "stock/z.html".

When delivered to a terminal, those contents stored in DB 3b are converted to the format which can be output (displayed) by the terminal (the content format of the terminal stated above), as stated below. The converted contents are stored in DB 3b with other file names. Fig. 5 shows that the HTML format content (file name) "stock/z.html" has been converted to the text format content "stock/z.txt", and both of those files has been stored in DB 3b.

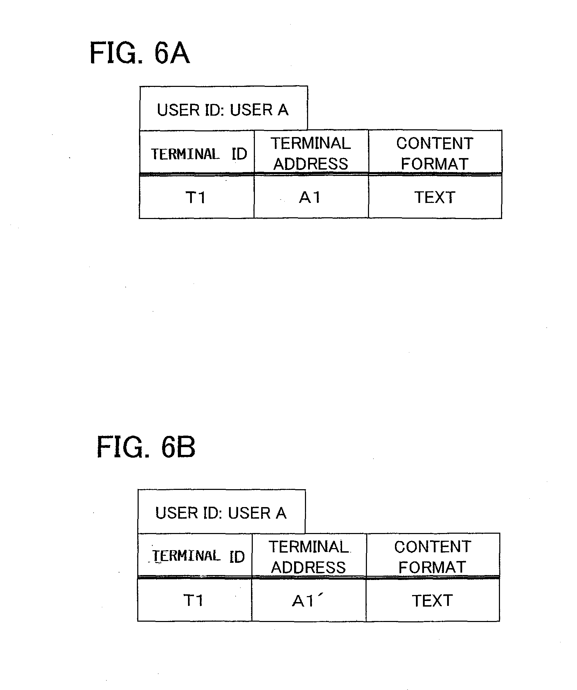

Figs. 6A and 6B show examples of the terminal management table, and Fig. 6A shows the table before changing the terminal address and Fig. 6B shows the table after changing the terminal address, respectively.

The terminal management table is a table which manages information of the terminal. If the terminal is a personally owned terminal (for example, PDA or cell phone) of the user, the terminal management table can be generated (registered) in the messaging server 3 in advance through the management terminal maintained by the service provider, or can be generated in the messaging server 3 through any of the terminals 2i when acquiring contents.

On the other hand, if the terminal 2i is a terminal which can be utilized by anyone, such as kiosk terminals and terminals installed in an Internet Cafe, it is considered that registration in advance is difficult, therefore, the table will be generated through the terminal operated by the user oneself when acquiring contents.

The terminal management table is provided with respect to each user ID, and indexed and searched by the user ID. Figs. 6A and 6B show examples of the terminal management table when the user ID is user A, and if other users such as user B or user C are present, the terminal management table for user B, the terminal management table for user C and so on will be provided.

The terminal management table has user ID, terminal ID, terminal address and content format as data items.

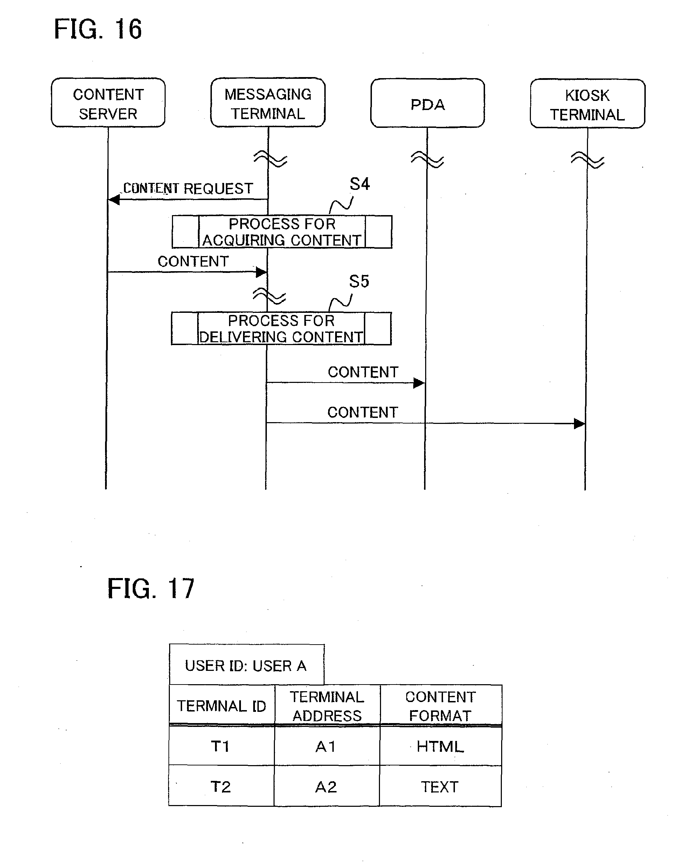

The user ID is an identifier allocated to the subscribed user, and same as the user ID of the tag information stated above. Also, the terminal ID, the terminal address and content format are those stated above, and are the same as those stored in the memory unit 2d of the terminal. It is to be noted that, in the case of multi-mode in which a plurality of terminals are allocated to a single user (described below), the terminal ID, the terminal address and the content format of each terminal may be provided (see Fig. 17, which is described below).

If the terminal 2i is a mobile communication terminal such as a PDA or a cell phone, the address of the terminal 2i will change along with movement of the terminal 2i. Therefore, the address of the terminal 2i may change from address A1 to A1' as shown in Figs. 6A and 6B.

It is to be noted that, after initial set-up, the user can modify details of the user content management table, content management table, and the terminal management table stored in the messaging server through the terminal 2i of the user or a dedicated terminal.

Referring to Fig. 3 again, the communication IF unit 3c of the messaging server 3 performs sending and receiving processes for sending and receiving operations of data from and to the communication network 5, gives data from the communication network 5 (the content server 4 and the terminals 21 to 2r) to the processing unit 3a, and sends data from the processing unit 3a to any of the terminals 2i through the communication network 5. Communications between the communication IF unit 3c and the communication network 5 may be wired communication or wireless communication.

As described above, a plurality of the messaging servers may be provided, and in this case, load sharing is performed such that one messaging server includes server A, another messaging server includes server B and so on.

Referring to Fig. 1 again, the content server 4 is a server which stores contents provided on users. The contents include a variety of information such as stock price information, news, music and image, and the content formats also include a variety of formats, for example, image data in bitmap, JPEG, MPEG, GIF formats and the like, HTML format data and text data. As described above, a plurality of the content servers may be provided, and in this case, it is possible to take the form such that one content server stores stock price information and another content server stores news.

### [Operation of the Messaging System]

Now, process flow is described with an example in the case that the messaging system 100 provides the messaging service.

### (1) Stock Price Information Delivery Service

Description will be made of the service which delivers stock price information to users as an example.

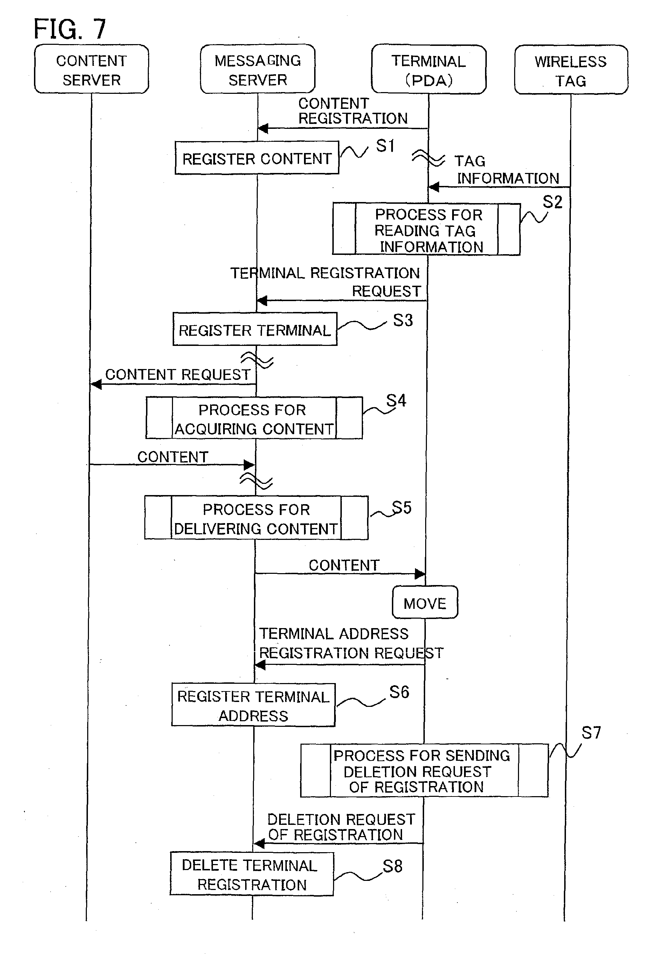

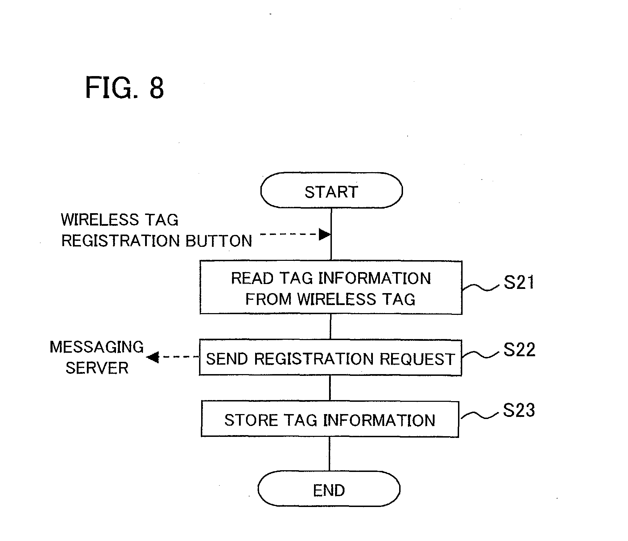

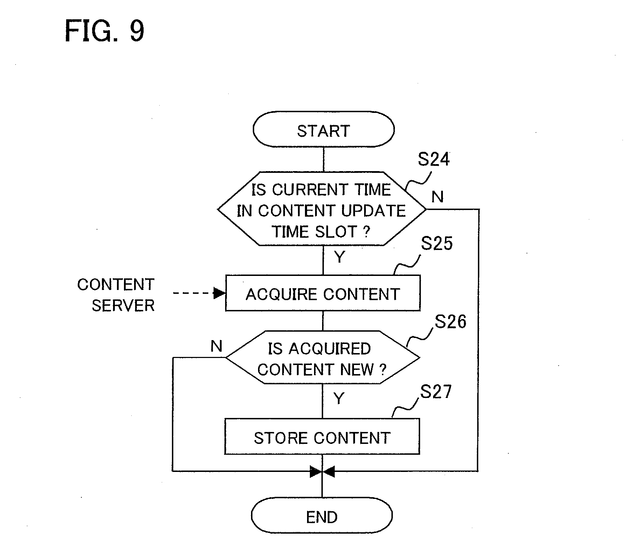

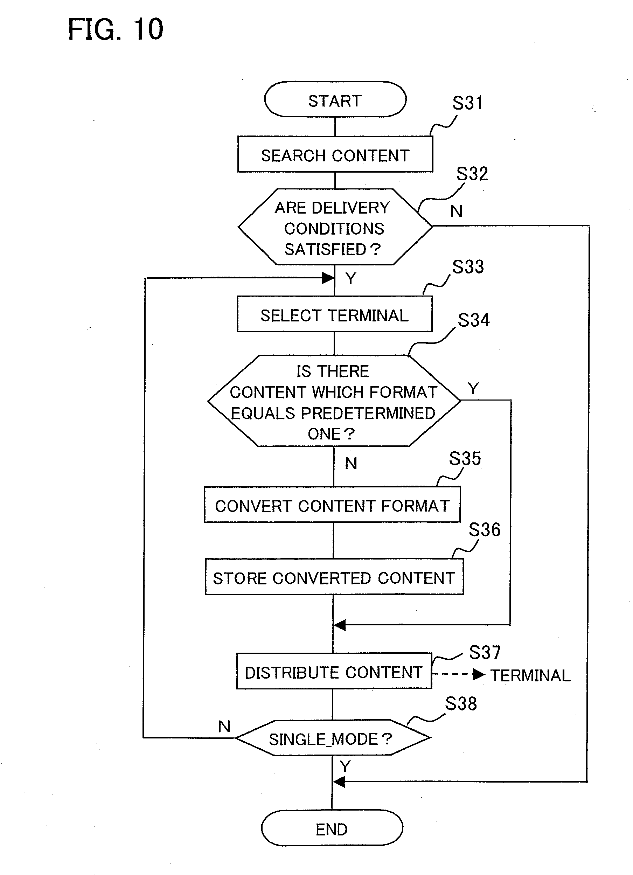

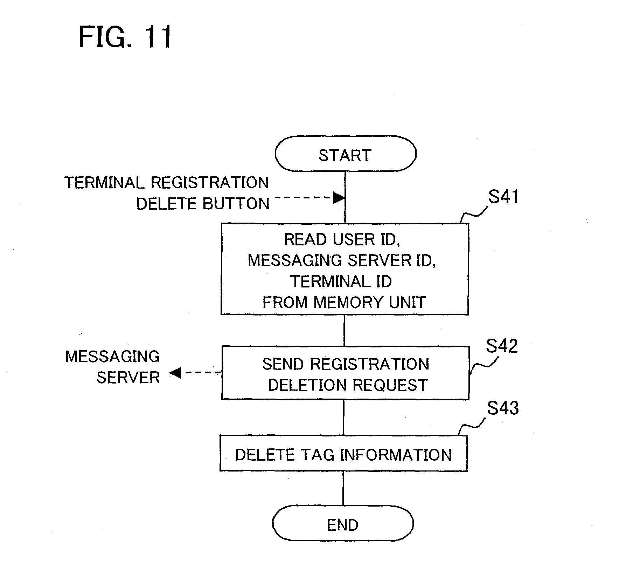

Fig. 7 is a sequence diagram showing process flow of the messaging system 100 from the content registration to the content delivery. Fig. 8 is a flow chart showing the tag information reading flow of step S2 in Fig. 7. Fig. 9 is a flow chart showing flow of the content acquisition process of step S4 in Fig. 7. Fig. 10 is a flow chart showing flow of the content distributing process of step S5 in Fig. 7. Fig. 11 is a flow chart showing the registration deletion request sending flow of step S6 in Fig. 7.

The terminal 21 is assumed herein as a PDA carried by the user who possesses the wireless tag 1. The PDA 21 is able to wirelessly communicate with a mobile communication network being included in the communication network 5 and communicates with the messaging server 3 through the communication network 5. Also, the content desired by the user is stock price information of a company (assumed as Company Z), which is stored in the contents server 4. The registration of this stock price information of Company Z is assumed to be conducted by the user using the PDA 21 at the time of subscription to the service or after subscription to the service.

First, the user accesses the messaging server 3 and registers the stock price information which is the content desired by the user using the PDA 21. For example, the messaging server 3 has functions of Web server, and the user accesses the messaging server 3 from Web browser of the PDA 21 and registers the content on Web screen. In this registration of the stock price information, the user specifies the user ID, the content address, the delivery mode, the delivery trigger, the delivery condition and the update time slot using the PDA 21.

Based on these specified information, the messaging server 3 generates the user content management table (see Fig. 4A) and the content management table (see Fig. 5A), then registers the content (stock price information) (S1 in Fig. 7).

It is to be noted that if content registration is executed at the time of subscription to the service, user ID is not allocated to a user yet, in this case, the messaging server 3 will decide user ID, allocate it to user and store it as the user ID of the user content management table.

The content registration information is preferred to be prevented from alteration by other users with security functions equipped with the communication network 5, the PDA 21, the messaging server 3 and others.

After content registration, the PDA 21 (processing unit 2b) wirelessly communicates with the wireless tag 1 and reads the tag information stored in the internal memory of the wireless tag 1 (in this case, the user ID (user A) and the messaging server ID (FQDN)) (S2 in Fig. 7). Reading of the tag information is performed by user pressing a wireless tag registration button (tag information reading button) provided on the input unit 2e of the PDA 21. This wireless tag registration button may be an icon displayed on the output unit 2e.

When the user presses (or clicks, touches, for example) this button, the PDA 21 wirelessly communicates with the wireless tag 1 within a predetermined distance and reads the tag information stored in the internal memory of the wireless tag 1 by wireless communication (S21 in Fig. 8).

After reading tag information, the PDA 21 acquires IP address of the messaging server 3 from the messaging server ID (FQDN) by means of mechanism (provided on the communication network 5) such as DNS (Domain Name System). Based on the IP address acquired, the PDA 21 sends registration request of itself (terminal registration request) to the messaging server 3 (S22 in Fig. 8).

This terminal registration request includes the user ID (user A) contained in the tag information, as well as the terminal ID (T1), the terminal address (IP address A1) and the content format (text) stored in memory unit 2d of the PDA 21.

When receiving the terminal registration request, messaging server 3 (processing unit 3a) generates in DB 3b the terminal management table (see Fig. 6A) corresponding to the user ID included in the terminal registration request and registers the terminal (S3 in Fig. 7).

Then, the PDA 21 stored the tag information in the memory unit 2d (S23 in Fig. 8).

After registration of the terminal, the messaging server 3 (processing unit 3a) acquires the content from the content server 4 in order to deliver the content to the registered terminal (S4 in Fig. 7).

More specifically, the messaging server 3 compares the update time slot in the content management table with current time and decides whether it is possible or not that the content to be delivered to the user A (stock price information) has been updated (S24 in Fig. 9).

In the example shown in Fig. 5 A, if current time is in the range of the content update time slot 9:00 to 15:00, the stock price information may have been updated. Therefore, the messaging server 3 compares current time with the content update time slot and; if current time is included in the range of the content update time slot 9:00 to 15:00 (Y of S24 in Fig. 9), requests the stock price information from the content server 4 at a predetermined frequency. On the other hand, if current time is not included in the range of the content update time slot (N of S24 in Fig. 9), the messaging server 3 does not request the stock price information from the content server 4.

As a protocol for requesting contents, for example, HTTP (Hyper Text Transfer Protocol) may be used. It is to be noted that the content server and the messaging server may be configured as single server, and in this case, the internal protocol defined exclusively may be used.

The frequency of requesting content may be a predetermined frequency considering capabilities of the messaging server 3 and the content server 4 (for example, once every five (5) or ten (10) minuets), or may be the frequency for which the user has applied.

It is to be noted that the requests of contents are performed in a common way for all the registered users, rather than independently for each individual user.

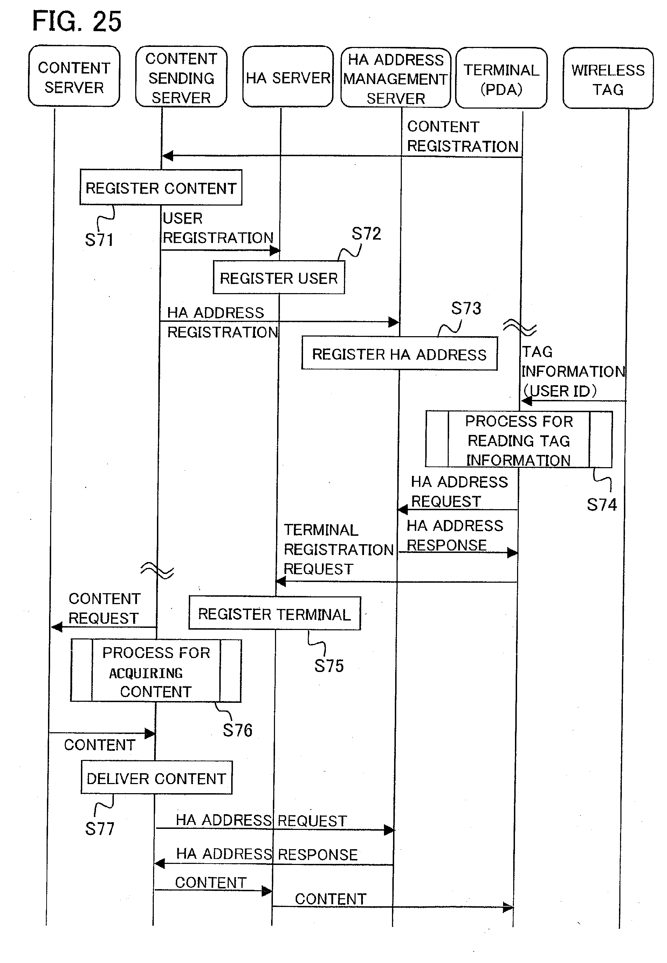

When the content server 4 sends the stock price information (HTML format) to the messaging server 3 (S25 in Fig. 25), the messaging server 3 compares the acquired stock price information with the stock price information already stored in DB 3b and decides whether the acquired stock price information is new or not (S26 in Fig. 9). More specifically, comparing the updated times of both stock price information (for example, time information set up in the Last-Modified entity-header field of HTTP/1.1), if the acquired stock price information is later than the stock price information already stored, it is decided that the acquired stock price information is new, otherwise it is decided that the acquired stock price information is not new. Also, if the stock price information is not stored in DB 3b, it is decided that the acquired stock price information is new.

If acquired stock price information is new (Y of S26 in Fig. 9), the messaging server 3 stores (memorizes) the acquired stock price information in DB 3b, and registers the content address (URL). and the file name associated to the stock price information into the content management table (see Fig. 5A) (S27 in Fig.9). On the other hand, if acquired stock price information is not new (N of S26 in Fig. 9), the storing operation of step S27 is not executed.

Then, the messaging server 3 (processing unit 3a) executes a distributing process of stock price information (S5 in Fig. 7). More specifically, first, the messaging server 3 refers to the user content management table and searches the content to be delivered to the terminal of the user (S31 in Fig. 10). In this search; for the PDA 21, the stock price information is searched.

Then, the messaging server 3 decides whether the searched content satisfies delivery conditions (the delivery trigger and the delivery condition in the user content management table) or not (S32 in Fig. 10). For stock price information, it is decided that the stock price information is updated or not, based on the update time in the user content management table.

If the updated time is not filled in (i.e., stock price information is not delivered at all), or if the filled-in updated time is earlier than the updated time of the stock price information stored in DB 3d, it is decided that the stock price information is updated, and consequently, satisfies the delivery condition.

If the delivery condition is satisfied (Y of S32 in Fig. 10), the messaging server 3 refers to the terminal management table and selects the terminal to which the content is delivered (S33 in Fig. 10). For the stock price information, PDA 21 of the user A (T1) is selected.

Then, the messaging server 3 refers to content format of the selected terminal in the terminal management table and decides whether the content which has the content format of the terminal is stored in DB 3b or not (S34 in Fig. 10).

The content format of PDA 21 is in text format, but the stock price information stored in DB 3b of the messaging server 3 is in HTML format. Therefore, stock price information in text format, which is the content format of PDA 21, is not stored. in DB 3b.

As in this case, if the content which has the content format of the terminal is not stored in DB 3b (N of S34 in Fig. 10), the messaging server 3 converts the content format and stores the converted content in DB 3b (S35 and S3 6 in Fig. 10). On the other hand, if the content which has the content format of the terminal is already stored in DB 3b (Y of S34 in Fig. 10), the messaging server 3 does not execute processes of step S35 and S36 and immediately executes content distributing process of step S37.

The stock price information in HTML format is converted to the stock price information in text format and stored in DB 3b (S35 and S36 in Fig. 10). Conversion from HTML format to text format is achieved, for example, by deleting HTML tags from HTML documents.

After converting the content format and storing the converted content, the messaging server 3 registers file name of the converted content into the content management table. For example, for the stock price information in text format, file name "stock/z.txt" is registered in the content management table (see Fig. 5B).

By storing these converted file in the messaging server 3 and registering information associated to the file into the content management table, it is possible to deliver files being converted once to other users.

After conversion of the content is completed, the messaging server 3 delivers the converted content (the stock price information in text format) to PDA 21 (S37 in Fig. 10). In this point, the messaging server 3 writes information set up in the Last-Modified entity-header field of HTTP/1.1 (for example, 2002.07.01 13:00) into the content updated time field of the content management table. Also, the messaging server 3 increments the content delivery count by one.

Then, the messaging server 3 decides whether the delivery mode of the user content management table is single-mode or multi-mode (S38 in Fig. 10). If it is single-mode (Y of S38 in Fig. 10), the messaging server 3 terminates the distributing process for the time being, and if it is multi-mode (Y of S38 in Fig. 10), in order to execute distributing processes for other registered terminals, the messaging server 3 executes processes of step S33 to S37 for other registered terminals, then terminates the distributing process.

After this, during the content update time slot, the content acquisition process (S4 in Fig. 7) and the content distributing process (S5 in Fig. 7) are repeated with predetermined time intervals, and the updated content is delivered to the registered terminal. The predetermined time intervals may be determined in advance or may be specified by the user.

In addition, though delivery of stock price information to one (1) user whose user ID = user A is described, if other user (for example, user ID = user B) has subscribed to the same delivery service, the messaging server 3 would multicast the stock price information to user A and user B.

Further, if a plurality of the messaging servers (for example, assumed as two (2) messaging servers 31 and 32) has been provided, and if user A has been accommodated in the messaging server 31 and user B has been accommodated in the messaging server 32, then the messaging server 31 would deliver the stock price information to the terminal of user A and the messaging server 32 would deliver the stock price information to the terminal of user B.

When finish time of the content update time slot (15:00) is passed, the messaging server 3 stops the.content acquisition process and the content distributing process until start time of the content update time slot (9:00) comes around again.

When PDA 21 moves from home network to external network, for example, and the terminal address changes from address A1 to A1', PDA 21 sends the terminal registration request to the messaging server 3. This terminal registration request includes the user ID (A), the terminal ID (T1) and the changed terminal address (A1').

When the messaging server 3 receives the terminal address registration request, it changes the terminal address of the terminal management table, corresponding to the user ID (A) and the terminal ID (T1) included in the terminal address registration request, from A1 to A1' (S6 in Fig. 7, see Fig. 6B). In this way, PDA 21 can be delivered contents, if the address has been changed.

If the user wants to stop delivery of contents to PDA 21, delivery can be stopped by deleting registration of the terminal in the messaging server 3. This deletion of registration is achieved by sending the registration deletion request to the messaging server 3.

First, the.user press a registration delete button provided on the input unit 2e of PDA 21. This registration delete button may be an icon. When the user presses (or clicks, touches, for example) this button, PDA 21 (processing unit 2b) reads the user ID, the messaging server ID and the terminal ID from the memory unit 2d (S41 in Fig. 11).

In addition, it is possible to make PDA 21 not store the user ID and the messaging server ID received from the wireless tag 1 in the memory unit 2d. In this case, when registration deleting process is executed, PDA 21 would read the user ID and the messaging server ID (i.e., tag information) from the wireless tag 1 again.

Then, PDA 21 acquires IP address of the messaging server 3 from the messaging server ID (FQDN) by means of mechanism such as DNS, and sends registration deletion request including the user ID and the terminal ID to the messaging server 3 (S42 in Fig. 11). It is to be noted that IP address of the messaging server 3 acquired at the time of terminal registration may be stored in the memory unit 2d, and in this case, PDA 21 can access the messaging server 3, using IP address of the messaging server 3 stored in the memory unit 2d, without using DNS and the like.

When the messaging server 3 receives this registration deletion request, it deletes (erases) the terminal management table corresponding to the user ID and the terminal ID included in the registration deletion request. Consequently, contents will not be delivered from the messaging server 3.

After sending the registration deletion request, PDA 21 immediately deletes (erases) the tag information stored in the memory unit 2d (S43 in Fig. 11).

It is to be noted that the tag information from the wireless tag 1 may be read when PDA 21 is supplied with power (turned on), in addition to or as substitute for the operation of the tag information reading button of PDA 21. Also, deletion of the tag information from PDA 21 and deletion of the terminal registration information from the messaging server may be executed when PDA 21 is turned off power. This is same in the cases of a following example (2) of a kiosk terminal and the like and an example (3) of a car navigation system, as well as in second and third embodiments.

### (2) Content Delivery to Kiosk Terminal and so on

Now, described are processes when a user with the user ID of above example (1) registers a kiosk terminal (assumed as a terminal 22) as the terminal to which contents are delivered.

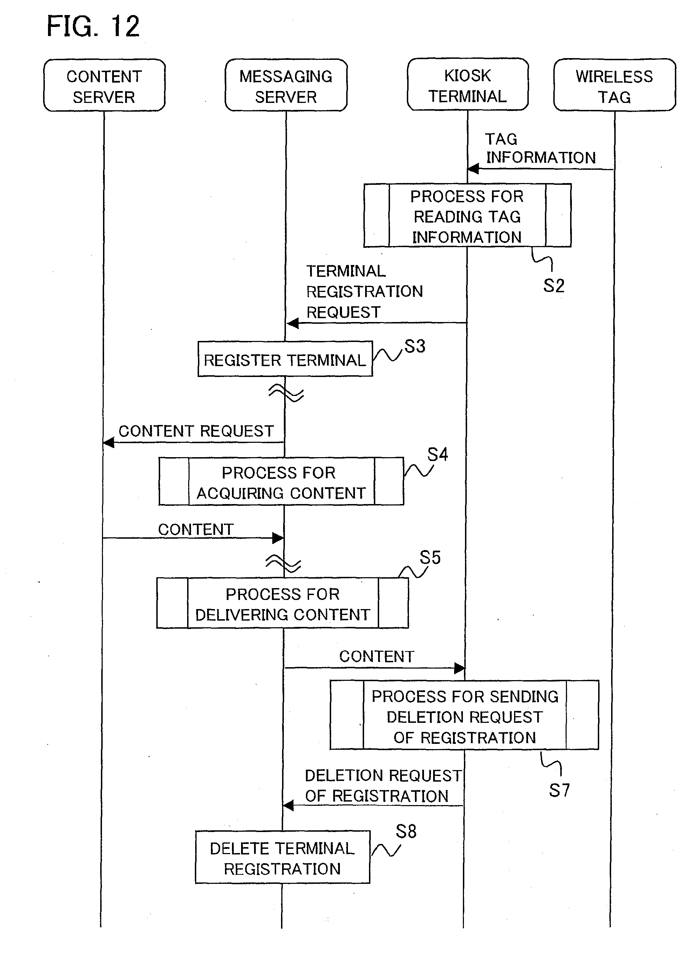

Fig. 12 is a sequence diagram showing process flow of the messaging system 100. In Fig. 12, the same processes as those of Fig. 7 are given the same symbols, and detail description thereof will be omitted.

A kiosk terminal 22 is provided with a terminal registration menu or a terminal registration button. When the user selects the terminal registration menu or presses the terminal registration button of the kiosk terminal 22, a wireless tag reader 2a of the terminal 22 reads tag information (user ID and messaging server ID (FQDN)) stored in the wireless tag 1 (S2 in Fig 12).

The kiosk terminal 22 acquires IP address of the messaging server 3 from FQDN of the messaging server 3 by means of mechanism such as DNS. Subsequently, the kiosk terminal 22 sends to the messaging server 3 the terminal registration request message including the user ID (user A), the terminal ID (T2), the terminal address (A2) and the receivable content format (HTML format) (S2 in Fig. 12).

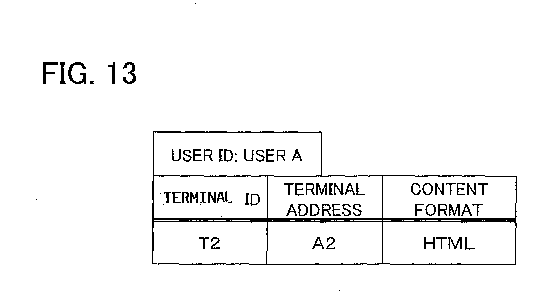

The messaging server 3 registers the kiosk terminal 22 based on the terminal registration request message (S3 in Fig. 12). Since the user has specified single-mode as the delivery mode, details of the user terminal management table in above example (1) are overwritten with information configured in the terminal registration request message, as shown in Fig. 13.

Same as above example (1), the messaging server 3 requests and acquires the content from the content server 4 in order to deliver to the user A (S4 in Fig. 12). In this point, the messaging server 3 compares updated time of the content already acquired with updated time of the content acquired this time, and if the content acquired this time is newer than the content acquired and stored previously, then the messaging server 3 replaces the content acquired previously with the content acquired this time. Simultaneously, the messaging server 3 replaces content update information in the content management table with the information of new content.

Then, when distributing the content to the user A, the messaging server 3 compares update information of the content delivered to the user A previously with update information of the content registered in the content management table. Herein, it is assumed that the content has been updated after last time the content was delivered (for example, the value of the Last-Modified entity-header field is 2002.07.01 13:10, which is given to the content response message received from the content server 4). In this case, the messaging server 3 selects the terminal to which the content is delivered (kiosk terminal 22) based on the user terminal management table shown in Fig. 13, and delivers the content to the kiosk terminal 22 (S5 in Fig. 12). Since the kiosk terminal 22 can be delivered with HTML documents, the messaging server 3 does not execute the content converting process.

Subsequently, if use of the kiosk terminal 22 will be terminated, the user can terminate the use of the terminal by selecting a terminal registration delete menu or pressing a terminal registration delete button provided on the kiosk terminal 22.

Since the terminal registration deleting process of the kiosk terminal 22 and the messaging server 3 is the same as that in the case of above example (1), the description thereof is omitted herein.

In the case that a personal computer installed in Internet café is used as the terminal and the content is delivered to this terminal, the same process as that of the kiosk terminal 22 is also executed.

Though, in above example, a method that the registering process of the kiosk terminal 22 is activated by user selecting the terminal registration menu (or pressing the terminal registration button) is described, it may be possible that the kiosk terminal 22 automatically reads the tag information from the wireless tag 1 approaching within a predetermined distance (several tens of centimeters or several meters) and executes the registering process. In the same way, it may be possible that registration deleting process is automatically executed when the wireless tag 1 moves a predetermined distance or more away from the kiosk terminal 22.

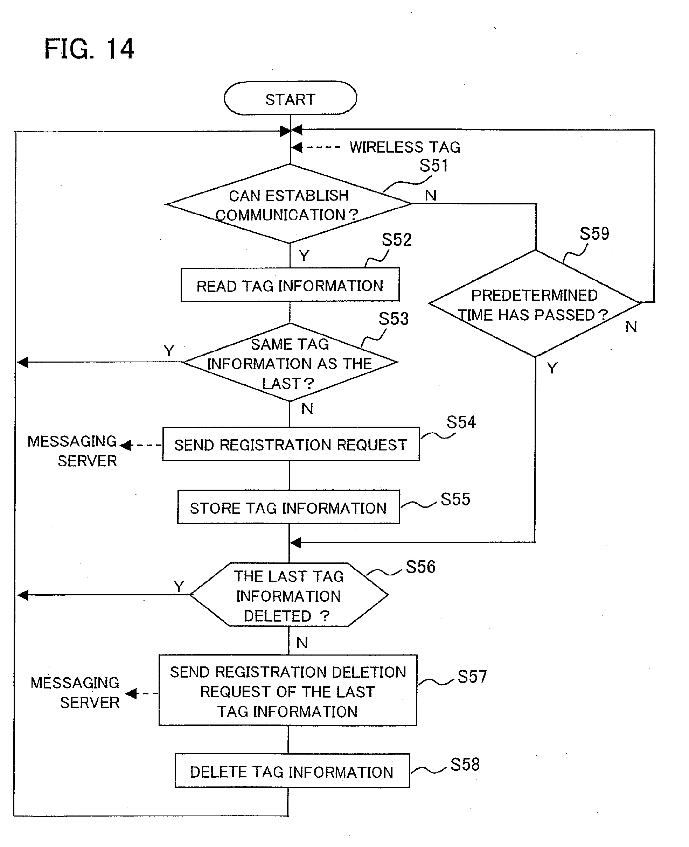

Fig. 14 is a flow chart showing the tag information reading flow and the registration deletion request transmitting flow in the case that the registering process and the registration deleting process of the terminal is executed automatically.

The kiosk terminal 22 checks whether it is possible to communicate with wireless tag 1 or not, with predetermined time intervals (for example, time intervals of between several milliseconds and several seconds) (S51). This is achieved, for example, by the kiosk terminal 22 transmitting a predetermined code sequence (for example preamble signal) with predetermined time intervals at predetermined signal strength and by the wireless tag 1 sending back acknowledgement response (Ack) to the terminal 22 at predetermined signal strength when receiving this code sequence. By configuring this signal strength such that it is possible to receive the signal within several meters, the kiosk terminal 22 successfully communicates with the wireless tag 1 when the wireless tag 1 is present within several meters from the kiosk terminal 22.

When being able to communicate with the wireless tag 1 (Y of S51), the kiosk terminal 22 reads the tag information from the wireless tag 1, compares the read tag information with the tag information already stored in the memory unit 2d of the kiosk terminal 22 (the last tag information) and decides whether both tag information is the same or not (S53).

If both the read and stored tag information are not the same or if it is not possible to compare because the stored tag information has been erased from the memory unit 2d (N of S53), the kiosk terminal 22 transmits to the messaging server 3 the terminal registration request based on the tag information read out in step S 52 (S54), and after transmission, stores the tag information in the memory unit 2d (S55). These processes of steps S54 and S55 are the same as processes of steps S22 and S23 in Fig. 8 described above, respectively. In this way, the terminal registering process is executed in the messaging server 3.

It is to be noted that, when step S53 is "N", it may be possible to additionally read out tag information from the wireless tag 1 one or more times periodically, then proceed to step S54 in the case that all these read tag information are the same. In this way, registration of new tag information is ensured.

On the other hand, if both read and stored tag information are the same (Y of S53), since this means that the same wireless tag 1 is present in the vicinity of the kiosk terminal 22, the kiosk terminal 22 will not send the terminal registration request or the terminal registration deletion request and will repeat the deciding process of step S51 again.

After storing the tag information, the kiosk terminal 22 decides whether the last tag information is deleted from the memory unit 2d (S56). If the last tag information is not deleted (N of S56), the kiosk terminal 22 sends registration deletion request of the last tag information to the messaging server 3 (S57) and deletes the last tag information from the memory unit 2d (S58). These processes of steps S57 and S58 are the same as processes of steps S42 and S43 in Fig. 11 described above, respectively. In this way, the terminal registration deleting process is executed in the messaging server 3.

On the other hand, if the last tag information is already deleted from the memory unit 2d in step S56, the terminal registration is also deleted in the messaging server 3, therefore the kiosk terminal 22 will not send the registration deletion request to the messaging server 3 and will repeat processes form step S51.

If the kiosk terminal 22 decides that communication with the wireless tag 1 can not established (N of S51) in step 51 (N of S51), it decides whether a predetermined time period (for example, between several seconds and several tens of seconds) has passed or not (S59). If a predetermined time period has passed, in other word, if the time period during which communication with the wireless tag 1 can not established exceeds a predetermined time period (Y of S59), since it is considered that the wireless tag 1 moves outside a predetermined distance from the kiosk terminal 22, the kiosk terminal 22 would execute processes from step S56. On the other hand, if a predetermined time period has not passed (N of S59), the kiosk terminal 22 would return to step S51 again.

With these processes, it is possible to perform automatic registration and registration deletion of the terminal. It is to be noted that these processes may be applied to the terminal such as PDA 21 and the personal computer in above example (1), as well as a car navigation system in following example (3) and the terminals of second and third embodiments.

### (3) Content Delivery with Voice Call Protocol.

The terminal may be a car navigation system (hereinafter referred to as "car navigation system") 23 equipped to a vehicle, and processes to deliver contents (for example, traffic information) to a car navigation system by means of a voice (audio) call protocol are described below.

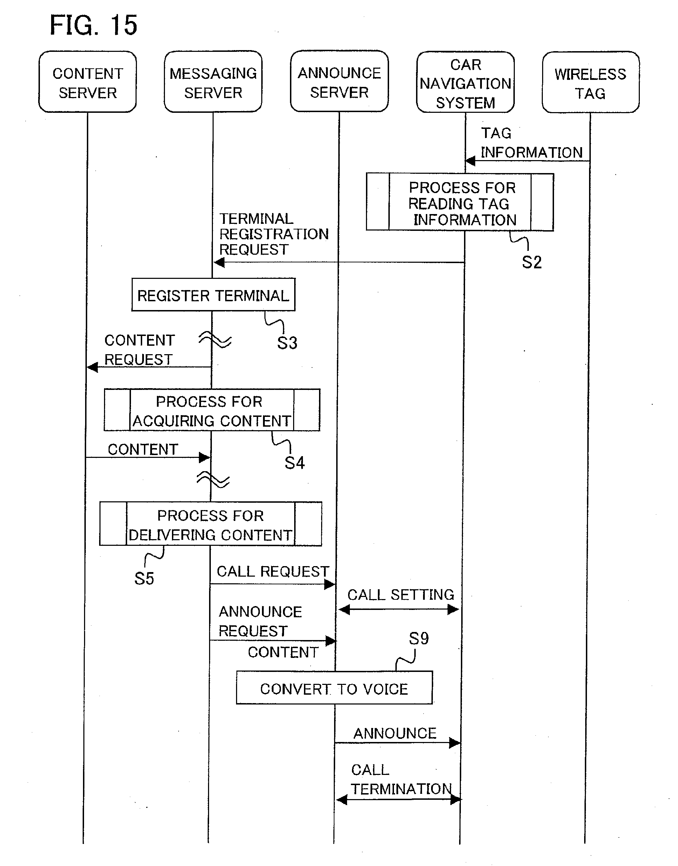

Fig. 15 is a sequence diagram showing flow of processes of content delivery to the car navigation system 23 by such means

The same processes as those of Fig. 12 described above are given the same symbols, and detail description thereof will be omitted.

In this example, an announce server which is not shown is connected to the communication network 5 shown in Fig. 1. The announce server has functions to set up call to the car navigation system 23 with a protocol such as VoIP (Voice over IP), convert the content (traffic information) to audio data and send it to the car navigation system.

First, When a user requests terminal registration to the car navigation system 23, the car navigation system 23 reads tag information from the wireless tag 1 and sends a terminal registration request to the messaging server 3 (82). In this way, the messaging server 3 registers the car navigation system 23 (S3). In this point, "voice" is specified as the format of traffic information (e.g. audio data) sent to the car navigation system 23. Then, the messaging server 3 acquires the content from the content server 4 (S4).

Since the content format in the terminal management table is "voice", the messaging server 3 requests set-up of voice call for the car navigation system to the announce server (S5). In this way, the announce server sets up voice call between it and the car navigation system 23.

After voice call is set, the messaging server 3 sends an announce request and traffic information to the announce server. The announce server converts the traffic information to audio (voice) data and sends it to the car navigation system 23, according to the announce request (S9). After the content delivery is completed, the announce server disconnects voice call between it and the car navigation system 23.

In this way, by providing the announce server, it is possible to provide contents to the terminals (car navigation systems) by means of audio (voice) or other data.

It is to be noted that, if the messaging server has the function of the announce server, the announce server may be omitted, and in this case, the messaging server 3 executes the set-up of call between it and the car navigation system as well as the process of converting data contents to audio format.

### (4) Content Delivery to Plural Terminals

Next, flow of content distributing processes to a plurality of terminals is described. Fig. 16 is sequence diagram showing content delivery to a plurality of terminals in the case of multi-mode, and Fig. 17 shows an example of the terminal management table of the user in multi-mode.

If "multi-mode" is specified as the delivery mode in the user content management table, multiple sets (two (2) sets in Fig. 17) of data items having the terminal ID, the terminal address and the content format of the terminal management table are provided corresponding to a plurality of the terminals. This plurality of terminals registered in the terminal management table is delivered with identical contents.

Though the diagrammatic representation is omitted in Fig. 16, after processes shown by steps S1 to S3, the content acquisition process of step S4 is executed, and the content is delivered to the plurality of terminals registered in the terminal management table (for example, PDA 21 and the kiosk terminal 22). The content is delivered to PDA 21 in text format and to the kiosk terminal 22 in HTML format. By distributing the content to PDA 21 and the kiosk terminal 22, the delivery count in the user content management table is incremented by two.

It is to be noted that details of the content distributing process of step S5 is described above referring to Fig. 10, therefore description thereof is omitted here.

In above description, though the content converting process is assumed to be executed by the messaging server 3, it is possible that a conversion apparatus other than the messaging server 3 (for example, a content conversion server) may be connected to the communication network and this conversion apparatus may execute the content converting process.

Also, in above description, though when the terminal address is changed as PDA 21 moves, PDA 21 is assumed to notify the messaging server 3 of the changed terminal address, if a location management server managing the terminal address of PDA 21 is connected to the communication network 5, it may be possible to notify this location management server of the changed terminal address of PDA 21. In this case, the location management server further notifies the messaging server 3 of the notified terminal address. In this way, PDA 21 has no need to notify the messaging server 3 of the address.

For charging of the service, though it is assumed to be performed according to the delivery count of contents, the charging may also be performed according to the delivery period of contents. Further, independently from the delivery count and the delivery period of contents, a fixed-rate system for each terminal of a fixed-rate system for each user may be chosen.

### <Second Embodiment>

### [Configuration of the Messaging System]

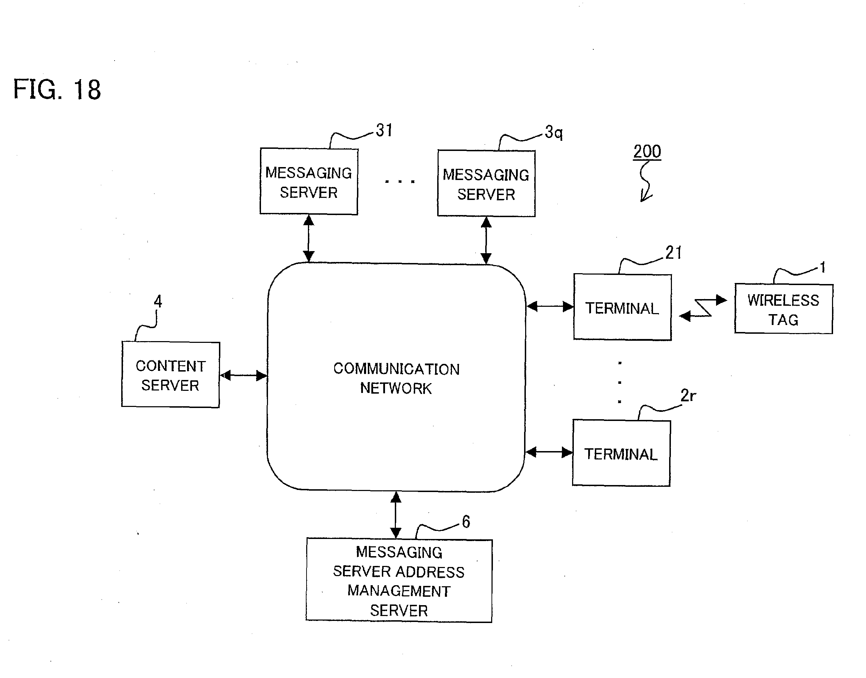

Fig. 18 is a block diagram showing general configuration of a messaging system 100 according to the second embodiment.

The messaging system 200 has a wireless tag 1, plural (r) terminals 21 to 2r, plural (q:q is integer more than 2) messaging servers 31 to 3q, content server 4 and a messaging server address management server 6. The same components as the messaging system 100 according to the first embodiment (the wireless tag 1, the terminals 21 to 2r and the content server 4) are given the same symbols, and detail description thereof is omitted. The messaging servers 31 to 3q have substantially same function as the messaging server 3. A plurality of messaging servers is provided here; it may be possible to provide only one messaging server. Also, a plurality of the messaging server address management server may be provided on perform load sharing.

In this embodiment, unlike the first embodiment, the internal memory in the wireless tag 1 only stores the user ID and does not store the messaging server ID (for example, FQDN). This is for the purpose of lowering memory capacity of the internal memory in the wireless tag 1 and reducing cost and size of the wireless tag 1.

On the other hand, in the first embodiment, the address of the messaging server is requested based on the messaging ID stored in the wireless tag 1, but in this embodiment, since the messaging server ID is not stored in the wireless tag 1, the messaging server address management server 6 is provided in order to request the address of the messaging server. This messaging server address management server 6 requests the address of the messaging server accommodating a user with the user ID, based on the user ID stored in the wireless tag 1.

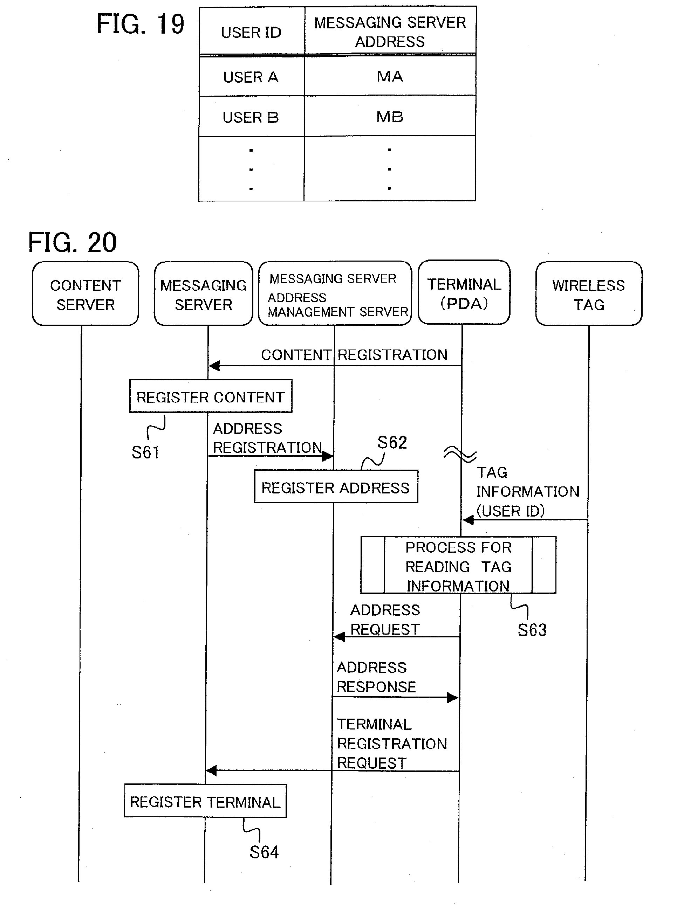

The messaging server address management server 6 holds a messaging server address management table in order to request the address of the messaging server accommodating the user. Fig. 19 shows an example of the messaging server address management table.

The messaging server address management table has data items having the user ID and the address of the messaging server accommodating a user with the user ID (the messaging server address). Fig. 19 illustrates a messaging server address MA which accommodates a user whose user ID = user A and a messaging server address MB which accommodates a user whose user ID = user B.

### [Operation of the Messaging System]

Now, process flow is described when the messaging system 200 with this configuration provides the messaging service. Fig.20 is a sequence diagram showing flow of processes in the messaging system 200.

First, a user who has user A as the user ID (herein after, referred to as just "user A") registers desired content (for example, stock price information) into one of the messaging servers 31 to 3q (assumed as the messaging server 31), using one of the terminals 21 to 2r (assumed as PDA 21).

Selecting one messaging server 31 from a plurality of the messaging servers 31 to 3q may be achieved by user A specifying an address, URL and the like, or may be achieved as below.

That is, in addition to the messaging servers 31 to 3q, a service reception server (for example, Web server), not shown, is provided. First, the user A accesses to the service reception server. The service reception server selects one messaging server such that load or the number of user registration is balanced, or with Round Robin method, and registers the content of the user A into the selected messaging server.

With registration of the content, the messaging server 31 holds the user content management table (see Figs. 4A and 4B) for user A, as with the case with the first embodiment (S61).

After registration of the content, the messaging server 31 sends the user ID and an address of itself (assumed as the address MA) to the messaging server address management server 6 and execute address registration (S 62). In this way, the messaging server address management server 6 adds the user ID = user A and the address MA of the messaging server 31 to the messaging server address management table (sea Fig. 19).

It is to be noted that, in order to execute this address registration, the address of the messaging server address management server 6 or FDQN is stored in the messaging server 31 (and 32 to 3q) in advance, and the messaging server 31 (and 32 to 3q) accesses the messaging server address management server 6 based on this address or FQDN. If a plurality of the messaging server address management servers 6 is provided, the messaging servers 31 to 3q execute address registration by selecting one of the messaging server address management server or execute address registration into messaging server address management server specified to each messaging server in advance. The former method includes, for example, a method which selects one messaging server address management server such that the load of the messaging server address management servers becomes uniform.

After that, if the user A carrying the wireless tag 1 receives the content using PDA 21, PDA 21 reads the user ID (the tag information) from the wireless tag 1 (S63).

Then, PDA 21 sends an address request to the messaging server address management server 6. This address request includes the read user ID (user A). In order to send this address request, the address of the messaging server address management server 6 or FDQN is stored in PDA 21 in advance, and PDA 21 sends the address request to the messaging server address management server 6 based on this stored address or FQDN. The same applies to other terminals 22 to 2r.

The messaging server address management server 6 returns to PDA 21 the messaging server address MA corresponding to the user ID included in the address request, as address response.

PDA 21 sends a terminal registration request to the messaging server 31 using the messaging server address MA returned with the address response. In this way, the messaging server 31 registers PDA 21 (S64), and after that, just like the first embodiment, contents are delivered to PDA 21 which is the registered terminal.

It is to be noted that the messaging server address of the messaging server address management table may be IP address or FQDN. In the case of FQDN, the terminal would acquire IP address of the messaging server from FQDN using DNS and the like.

### <Third Embodiment>

### [Configuration of the Messaging System]

Functions of the messaging server in the first embodiment may be divided and distributed to a plurality of servers. In the third embodiment, functions of the messaging server are divided and are distributed and deployed to a content sending server, a home agent (HA) and a home agent (HA) address management server.

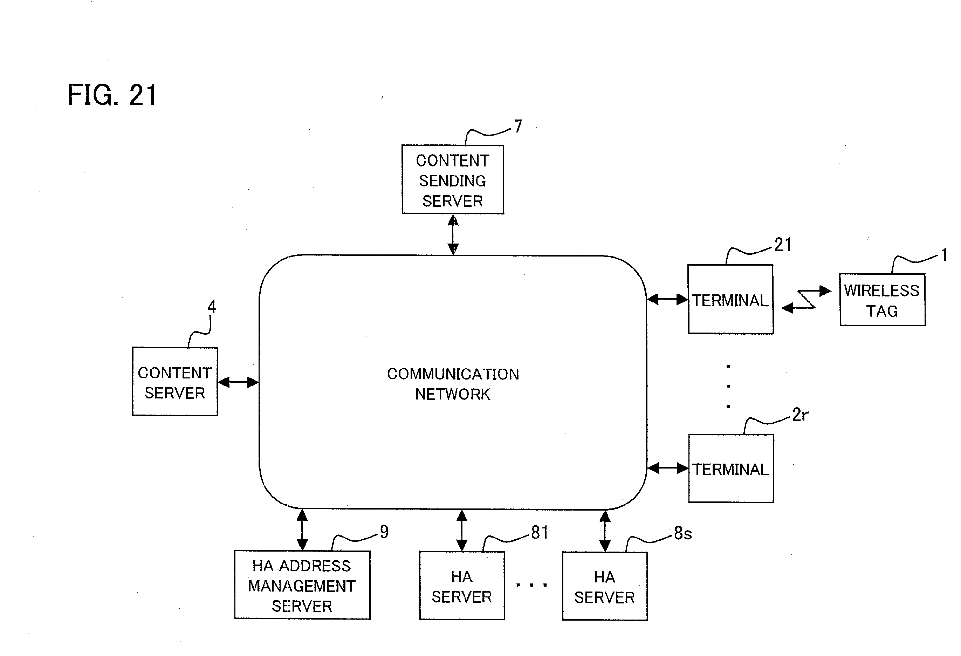

Fig. 21 is a block diagram showing general configuration of a messaging system 300 according to the third embodiment.

The messaging system 300 has a wireless tag 1, r terminals 21 to 2r, the content sending server, plural (s: s is integer more than 2) HA servers 81 to 8s, a HA address management server 9 and a content server 4. The same components as the messaging system 100 (see Fig. 1) according to the first embodiment (the wireless tag 1, the terminals 21 to 2r and the content server 4) are given the same symbols, and detail description thereof is omitted. It is to be noted that pluralities of the content sending servers, the HA address management servers and the content servers 4 may be provided.

The content sending server 7 acquires contents from the content server 4 and sends the acquired contents to the HA server accommodating the user desiring the contents out of the HA servers 81 to 8s. The content sending server 7 has a database (DB) internally, as is the case with the messaging server 3, and stores a user content management table in this DB.

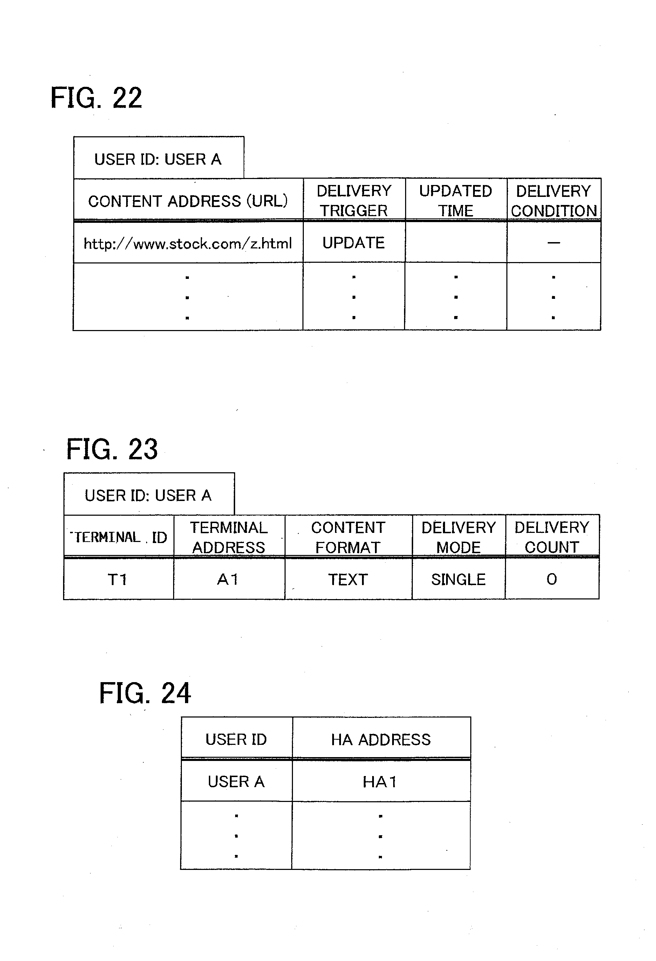

Fig. 22 shows an example of the user content management table held by the content sending server (internal DB).

The user content management table is a table which manages contents desired by the user and delivery conditions of contents, and is generated, when a user subscribes to the messaging service, by the service provider or the like based on subscription information provided from the user, or after subscription, by the user through any of the terminals 2i.

The user content management table is provided with respect to each user ID, and indexed and searched by the user ID. Fig. 22 shows an example of the user content management table when the user ID = user A, and if other users such as user B or user C are present, the user content management table for user B, the user content management table for user C and so on will be provided.

The user content management table has the user ID, the content address (URL), the delivery trigger, the updated time and the delivery conditions as data items.

As the user ID, NAI may be used as is the case with the user ID in the first embodiment described above, or IP address (a home address of the user) may be used. Each data item of the content address, the delivery trigger, the updated time and the delivery conditions is the same as that of the user content management table in the first embodiment described above (see Figs. 4A and 4B), therefore description thereof is omitted here.

Referring back to Fig. 21, HA servers 81 to 8s are servers in which users are accommodated and terminals used by users are registered. With this registration of users, HA 81 to 8s generate and hold the terminal management tables.

Fig. 23 shows an example of the terminal management table held by HA servers. The terminal management table is a table which manages information of a terminal. If the terminal is a personally owned terminal (for example, PDA or cell phone) of the user, the terminal management table can be generated (registered) in the HA servers 81 to 8s in advance through the management terminal maintained by the service provider, or can be generated in the HA servers 81 to 8s through any of the terminals 2i when acquiring contents.

On the other hand, if the terminal 2i is a terminal which can be utilized by anyone, such as kiosk terminals and terminals installed in Internet Café, it is considered that registration in advance is difficult, therefore, the table will be generated through the terminal operated by the user oneself when acquiring contents.

The terminal management table is provided with respect to each user ID, and indexed and searched by the user ID. Figs. 23 show an example of the terminal management table when the user ID = user A, and if other users such as user B or user C are present, the terminal management table for user B, the terminal management table for user C and so on will be provided.

The terminal management table has the user ID, the terminal ID, the terminal address, the content format, the delivery mode and the delivery count.

The user ID is the same as that described for the user content management table (see Fig. 22) stated above. The terminal ID, the terminal address, the content format, the delivery mode and the delivery count are the same as those in the first embodiment stated above, therefore description thereof is omitted.

Referring back to Fig. 21, the HA address management server is a server which manages addresses of HA accommodating each user, and holds a HA address management table in internal DB to conducts these management.

Fig. 24 shows an example of the HA address management table. The HA address management table has a user ID and an address of HA accommodating a user of the user ID (HA adress) as data items.

The user ID is the same as that of the user content management table described above. The HA address is an address of the HA server accommodating the user having the user ID. The HA address may be IP address or FQDN.

### [Operation of the Messaging System]

Fig. 25 is a sequence diagram showing flow of processes in the messaging system 300. Herein, by way of example, the terminal used by a user is assumed as PDA 21.

First, a user (assumed as user A) accesses the content sending server 7 and registers desiring contents at the time of subscription (S71).

In order for PDA 21 to access the content sending server 7, an address of the content sending server is stored in PDA 21 in advance, or is input by the user A. Alternatively, as described in the second embodiment, the service reception server not shown) may be provided, and PDA 21 may access this service reception server and may register contents into the content sending server. Particularly when a plurality of content sending servers is present, the service reception server may select the content sending server such that load or the number of users accommodated in the content sending server becomes uniform.

In registration of contents, the user ID, the content address (URL), the delivery trigger, the updated time, the delivery condition and the delivery mode are sent to the content sending server from PDA 21. If the user ID is allocated to a user at the time of contents registration, the user ID is not sent.

Out of those sent information, the user ID, the content address, the delivery trigger and the delivery condition are stored in DB of the content sending server 7 as the user contents management table (see Fig. 22). The delivery mode is stored in the content sending server 7 temporarily, then sent to the HA server by user registration.

Subsequently, the content sending server 7 determines which of the HA servers 81 to 8s accommodates the user A and sends a user registration request of the user A to the determined HA server (assumed as HA server 81). In this way, the HA server 81 registers the user A (S 72).

The method to determine the HA server may be a method in which, every time the user registration is executed, HA server is changed in order, such as Round Robin method, or may be a method in which the HA server is determined such that load, the number of users accommodated and the like of the HA servers become uniform. It is to be noted that addresses of the HA server 81 to 8s (IP addresses or FQDN) are stored in the content sending server in advance.

The user registration request includes the user ID (user A) and the delivery mode. Upon the user registration, the HA server 81 generates new entry for the user A on the terminal management table; the user ID (user A) and the delivery mode sent from the content sending server 7 are registered into the entry; and zero is set as default value of the delivery count.

Subsequently, the content server 7 sends to the HA address management server 9 a set of the user ID of the user A and the address of the HA server accommodating the user A (assumed as HA1). In this way, the HA address management server 9 registers the set of the user ID and the HA address sent from the content sending server 7 into the HA address management table (S73, see Fig. 25).

It is to be noted that if fixed IP address is used as the user ID, as MobileIP, the content sent to the IP address (i.e., user ID) is first sent to the HA server 81 (HA1) accommodating the user A and then forwarded from the HA server 81 to the terminal 21 used by the user A. Therefore, in this case, the IP address or the user ID is ascertained after the HA server is determined (or after HA address registration is executed). Consequently, after the HA server is determined (or after HA address registration is executed), the wireless tag 1 storing the user ID will be given to the user, or the user ID will be stored in the wireless tag 1 that is given to the user in advance.

Then, when receiving contents, the PDA 21 of the user A reads the user ID from the wireless tag 1 held by the user A (S74). After read-out of the user ID, PDA 21 sends HA address request including the user ID to the HA address management server 9. The HA address management server 9 refers to the HA address management table and returns an address of the HA server accommodating the user A (HA1) to PDA 21.

PDA 21 sends terminal registration request to the HA server 81 accommodating the user A, based on the returned address HA1 of the HA server, and registers itself. This terminal registration request includes, in addition to the user ID, the terminal ID of PDA21, the terminal address A1 and the text format. Based on these information included in the terminal registration request, the HA server 81 registers the terminal ID, the terminal address and the content format into the entry corresponding to the user ID on the terminal management table (see Fig. 23) (S75).

Then, the content sending server 7 sends content request to the content server 4, based on the content address on the user content management table (see Fig. 22) of the user A, and acquires the content as response to that (S76).

After that, the content sending server 7 delivers the content according to the delivery trigger and the delivery condition on the user content management table of the user A (S77). The content is delivered to the HA server 81 accommodating the user A and forwarded from the HA server 81 to PDA 21.

In order for the content sending server 7 to deliver the content to the HA server 81, the content sending server 7 requests a HA address of the HA server 81 to the HA address management server 9. This HA address request includes the user ID (user A). Upon receiving the HA address request, the HA address management server 9 refers to a HA address corresponding to the user ID included in the HA address request from the HA address management table and returns this to the content management server 7. Based on the returned HA address, the content sending server 7 sends the content to the HA server 81.

It is to be noted that, in Step S72, the content sending server 7 has decided the HA server. In this point, the content sending server 9 may have stored the HA address, corresponding to the user ID, and may use this HA address at the time of content delivery. In this way, it is possible to send the content to the HA server 81 without acquiring the HA address from the HA address management server 9, and the communication cost is reduced.

Also, when fixed IP address is used as the user ID, even if the content sending server 7 has not stored the HA address, the communication of the HA address request (and HA address response) with the HA address management server 9 may be omitted. This is because, as mentioned above, in this case, due to the user ID and HA address systems just like MobileIP, the content sent to the user ID is sent to the HA server accommodating the user by the communication network 5. It is to be noted that, in this case, a home agent server and a user identifier allocated to the user accommodated in the home agent server (i.e., an identifier corresponding to the home address of MobileIP) are allocated such that these belong to the same subnet, and the home agent server is positioned as a gateway residing at the entry point of the subnet.

The content sending server 7 sends to the HA server 81 the user ID of the user A along with the content.

Upon receiving the user ID (user A) sent along with the content, the HA server 81 refers to the terminal address, the content format and the like on the terminal management table (see Fig. 23) corresponding to the user ID. Subsequently, if conversion of the content based on the referred content format is needed, the HA server 81 converts a format of the content. Subsequently, the HA server 81 sends to the terminal (i.e., PDA 21) the content (or the converted content) according to the referred terminal address. In this way, the content is output on the display unit and the like of PDA 21, and the user A can view and listen to the content.

It is to be noted that if the IP address (home address) is used as the user ID, the process in which the content sent to the user ID is forwarded to the terminal address is considered as is the case with a process in which a packet sent to a home address (user ID) is forwarded to a care-of-address (terminal address) in MobileIP.

In the form that the IP address is used as the user ID, the content sending server 7 sets up the user ID on the header of the content and sends the content (packet) to the HA server 81. In this case, the HA server 81 may encapsulate the content (packet) from the content server 7 and may send to PDA 21 as new packet which destination address is the terminal address (IP address) of PDA 21, or may remove the header of the packet from the content server 7 and may send it after adding new header which destination address is the terminal address of PDA 21.

If the same content is delivered to a plurality of users accommodated in the same HA server (assumed as 81), it is possible to send the content from the content sending server 7 to the HA server only once, then send the content to a plurality of terminals.

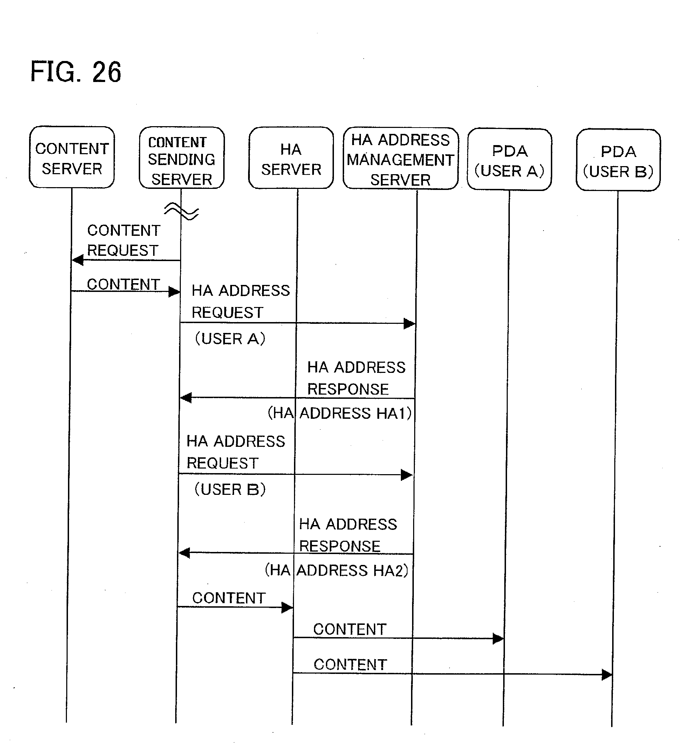

Fig. 26 is a sequence diagram in the case of delivering the same content to a plurality of users contained in the same HA server 81. In this figure, an example in which the same content is delivered to two (2) users A and B accommodated in the HA server 81 is illustrated.

It is to be noted that since data which is maintained in each server for the user B is the same as that of the user A, description thereof is omitted.

After acquiring the content from the content server 4, the content sending server 7 requests the delivery targets of the contents with the terminal management table. In this example, a plurality of users which are users A and B are requested as the delivery targets. In this way, the content sending server 7 acquires addresses of the HA servers accommodating each user from the HA address management server 9. Consequently, upon recognizing that the users A and B are accommodated in the same HA server 81, the content server 7 sends to the HA server 81 the content and the user identifiers of the users A and B.

When receiving the content, the HA server 81 recognizes that the content must be delivered to both of the users A and B by analyzing the message and forwards it to the users.

In this way, when the same content is delivered to a plurality of users, by conducting reception of the content from the content sending server 7 once, rather than plural times corresponding to the plurality of users, the cost of communication between the content sending server 7 and the HA server can be reduced.

According to the present invention, it is possible to send a variety of content or information desired by a user, such as text data, image data, video data and audio data to a terminal located in the vicinity of the user, depending on the movement of the user. Also, according to the present invention, it is possible to simplify the procedure for registering a user to a terminal. Further, according to the present invention, it is possible to convert content according to the abilities and characteristics (e.g. compatible formats) of a terminal, and deliver converted content to the terminal.

While illustrative and presently preferred embodiments of the present invention have been described in detail herein, it is to be understood that the aspects of the invention may be otherwise variously embodied and employed and that the appended claims are intended to be construed to include such variations except insofar as limited by-the prior art.

By enabling efficient data transfer, the present invention reduces unnecessary communication, data storage and loading of system modules, or a communication network.

## Claims

1. A messaging system comprising:
a terminal sending user identification information of a user using the terminal; and
a messaging server holding content which corresponds to the user identification information of the user, and delivering the content on receipt of the user identification information sent from the terminal.

2. The messaging system according to claim 1, wherein by wirelessly communicating with a wireless tag which is carried by the user and which stores the user identification information of the user, the terminal reads the user identification information from the wireless tag and sends the read user identification information to the messaging server.

3. The messaging system according to claim 2, wherein the wireless tag further stores identification information of the messaging server in addition to the user identification information, and wherein the terminal reads identification information of the messaging server from the wireless tag by wireless communication and sends the user identification information to the messaging server based on the read identification information of the messaging server.

4. The messaging system according to claim 2 or 3, wherein
the terminal reads the user identification information from the wireless tag in response to the user operating a predetermined button provided on the terminal.

5. The messaging system according to claim 2, 3 or 4, wherein
the terminal conducts wireless communication with the wireless tag at predetermined intervals, reads the user identification information from the wireless tag and if the newly read user identification information is different from previously read user identification information, sends the newly read user identification information to the messaging server.

6. The messaging system according to claim 5, wherein
if the newly read user identification information is different from the previously read user identification information, the terminal additionally reads the user identification information from the wireless tag one or more times at the predetermined intervals, and if all the read user identification information is the same, sends the user identification information to the messaging server.

7. The messaging system according to any of claims 2 to 6, wherein
the terminal reads the user identification information from the wireless tag when the terminal is supplied with power.

8. The messaging system according to any of claims 2 to 7, wherein
the terminal wirelessly communicates with the wireless tag when the wireless tag is present within a predetermined distance.

9. The messaging system according to any of claims 2 to 8, wherein
the terminal stores user identification information read from the wireless tag, and after storing, reads the user identification information from the wireless tag at a predetermined period, and if read user identification information is different from stored user identification information or if the user identification information can not be read from the wireless tag, deletes the stored user identification information, as well as requests the messaging server to delete the user identification information, and wherein
the messaging server deletes the user identification information in response to the deletion request from the terminal.

10. The messaging system according to any of claims 2 to 9, wherein
the terminal stores user identification information read from the wireless tag, and after storing, in response to the user operating a predetermined button provided on the terminal, deletes the stored user identification information, as well as requests the messaging server to delete the user identification information, and wherein
the messaging server deletes the user identification information in response to the deletion request from the terminal.

11. The messaging system according to any of claims 2 to 10 wherein
the terminal stores user identification information read from the wireless tag, and after storing; when the terminal is turned off, deletes the stored user identification, as well as requests the messaging server to delete the user identification information, and wherein
the messaging server deletes the user identification information in response to the deletion request from the terminal.

12. The messaging system according to any preceding claim, wherein
the terminal stores in advance terminal identification information and a terminal address of the terminal and sends the stored terminal identification information and the terminal address to the messaging server together with the user identification information, and wherein
the messaging server registers the terminal identification information and the terminal address related with the user identification information and sends the content to the terminal based on the terminal address.

13. The messaging system according to claim 12, wherein
if the terminal address is changed as a result of movement of the terminal, the terminal sends to the messaging server the changed terminal address together with the terminal identification information, and wherein
the messaging server registers the changed terminal address and the terminal identification information.

14. The messaging system according to claim 12 or 13, wherein
by wirelessly communicating with a wireless tag which is carried by the user and which stores user identification information of the user, the terminal reads the user identification information from the wireless tag and sends to the messaging server the read user identification information together with the terminal identification information and the terminal address, and requests the messaging server to delete the registration if a predetermined button provided on the terminal is operated, if newly read user identification information is different from previously read wireless information, if user identification information can not be read, or if the terminal is turned off, and wherein
the messaging server deletes the registration in response to registration deletion request from the terminal.

15. The messaging system according to any preceding claim, wherein
the terminal stores a content format which can be output by the terminal and sends the stored content format together with the user identification information to the messaging server, and wherein
if a format of the held content is different from the content format sent from the terminal, the messaging server converts the held content into the content format sent from the terminal and delivers the converted content to the terminal.

16. The messaging system according to any preceding claim, wherein
the messaging server acquires the content from a content server which holds content.

17. The messaging system according to claim 16, wherein
the messaging server stores a delivery condition of the content of the user and delivers to the terminal content which satisfy the delivery condition out of the content acquired from the content server.

18. The messaging system according to claim 16, wherein
the messaging server acquires the content from the content server at a predetermined period, and if generated time or updated time of newly acquired content is different from generated time or updated time of the last acquired content, delivers the newly acquired content to the terminal.

19. The messaging system according to claim 16, wherein
the messaging server acquires the content from the content server at a predetermined period, and if details of newly acquired content is different from details of the last acquired content, delivers the newly acquired content to the terminal.

20. The messaging system according to claim 16, wherein
the messaging server holds an update property of the content, and acquires the content from the content server based on the update property.

21. The messaging system according to claim 1, wherein
the messaging server holds information which indicates whether the content corresponding to the user identification information is delivered to a single terminal or a plurality of terminals, and if the information indicates delivering to a plurality of terminals, sends the content to other terminals except for the terminal.

22. The messaging system according to any preceding claim, wherein
the messaging server receives second user identification information other than the user identification information from a second terminal other than the terminal, and if the content corresponding to the user identification information is identical to the content corresponding to the second user identification information, delivers the content to the terminal and the second terminal.

23. The messaging system according to any preceding claim, wherein
the messaging server holds a delivery count of the content to the terminal and charges the user based on the delivery count.

24. The messaging system according to any preceding claim, further comprising:
a messaging server address management server which holds an address or identification information of the messaging server corresponding to user identification information, receives user identification information sent from the terminal and sends to the terminal the address or identification information of the messaging server corresponding to the received user identification information, wherein
the terminal sends the user identification information to the messaging server address management server and sends the user identification information to the messaging server based on the address or identification information of the messaging server corresponding to the user identification information sent from the messaging server address management server.

25. A messaging server comprising:
a memory unit holding content which corresponds to user identification information of a user to whom a content delivering service is provided;
a reception unit receiving user identification information sent from a terminal used by the user; and
a delivery unit reading out from the memory unit the content corresponding to the user identification information received by the reception unit and delivering the read content to the terminal.

26. A terminal used by a user to whom a content delivery service is provided, and which receives delivered content, the terminal comprising:
a transmission unit which transmits user identification information of the user using the terminal to a messaging server which delivers content;
a reception unit which receives from the messaging server the content corresponding to user identification information sent from the transmission unit; and a processing unit which executes processes, including display, audio output or storage, for the content received by the reception unit.

27. The terminal according to claim 26, further comprising:
a read unit which wirelessly communicates with a wireless tag storing user identification information in advance, and reads the user identification information stored in the wireless tag, wherein
the transmission unit transmits user identification information read by the read unit.

28. A messaging system comprising:
a terminal sending user identification information of a user using the terminal;
a home agent address management server holding an address or an identification information which corresponds to the user identification, and returning the address or the identification information on a receipt of the user identification information sent from the terminal;
a content sending server sending out the content; and
a home agent server which is accessed by the terminal based on the address or the identification information returned from the home agent address management server, receiving the content sent from the content sending server, and delivering the content to the terminal, which is accommodated by the home agent server, on a receipt of the user identification information sent from the terminal.

29. The messaging system according to claim 28, wherein by wirelessly communicating with a wireless tag which is carried by the user and which stores user identification information of the user, the terminal reads the user identification information from the wireless tag and sends the read user identification information to the home agent address management server.

30. The messaging system according to claim 28, wherein the content sending server holding content which corresponds to the user identification information of the user,
sends the held user identification information to the home agent address management server, and sends the content corresponding to the user identification information to the home agent server, based on an address or identification information of the home agent server corresponding to the user identification information sent from the home agent address management server.

31. The messaging system according to claim 28, wherein
the content sending server holds an address of a content server which holds content desired by the user wherein the address corresponds to the user identification information of the user, sends the held user identification information to the home agent address management server, and sends to the home agent server the content which is acquired from the address of the content server corresponding to the user identification information, based on the address or identification information of the home agent server corresponding to the user identification. information sent from the home agent address management server.

32. The messaging system according to claim 28, wherein
if the user identification information is a fixed address such that when the content is sent to the user identification information, the content is received by the home agent server accommodating the user,
the content sending server sends the content to the user identification information, and wherein
the home agent server forwards the content sent to the user identification information to the terminal which has sent the user identification information.

33. The messaging system according to claim 28, wherein
if the user identification information is information other than the fixed address such that when the content is sent to the user identification information, the content is received by the home agent server accommodating the user,
the content sending server sends the content to the home agent server accommodating the user of the user identification information, and wherein
the home agent server forwards the content from the content sending server to the terminal which has sent the user identification information.

34. The messaging system according to claim 28, wherein
if a plurality of users desiring the same content are present and if the plurality of users are accommodated in the same home agent server,
the content sending server when sending the same content sets up in the content the user identification information of the plurality of users and sends it to the home agent server, and wherein
the home agent server delivers the content to each terminal of the plurality of the user identification information which is set up in the content sent from the content sending server.

35. A terminal used by a user to whom content delivery service is provided, and which receives delivered content, the terminal comprising:
a first transmission unit which transmits user identification information of the user using the terminal to a home agent server address management server which manages an address of a home agent server delivering a content;
a first reception unit which receives from the home agent address management server an address or identification information of the home agent server corresponding to the user identification information sent from the first transmission unit;
a second transmission unit which transmits the user identification information to the home agent server based on the address or identification information of the home agent server which is received by the first reception unit;
a second reception unit which receives from the home agent server the content corresponding to the user identification information sent from the second transmission unit; and
a processing unit which executes processes, including display, audio output or storage, for the content received by the second reception unit.

36. The terminal according to claim 35, further comprising:
a read unit which wirelessly communicates with a wireless tag storing user identification information in advance, and reads the user identification information stored in the wireless tag, wherein
the first and second transmission units transmit user identification information read by the read unit.

37. A content sending server comprising:
a memory unit which stores user identification information of a user to whom content delivery service is provided and content which is desired by the user and which is related with the user identification information; and
a content sending unit which sends the content corresponding to the user identification information to a home agent server accommodating the user of the user identification information and sends the content desired by the user of the user identification information to the terminal that has sent the user identification information.

38. The content sending server according to claim 37, further comprising:
a user identification information transmission unit which transmits the user identification information to a home agent address management server which stores the user identification information and an address or identification information, which is related with the user identification information, of the home agent server accommodating user of the user identification information; and
a reception unit which receives from the home agent address management server the address or identification information of the home agent server corresponding to the user identification information sent from the user identification information transmission unit, wherein
the content sending unit sends the content to the home agent server, based on the address or identification information of the home agent server which is received by the reception unit.

39. A home agent server accommodating a user and which delivers content desired by the user to a terminal used by the user, the home agent server comprising:
a user identification information reception unit used by the user and which receives user identification information of the user sent from the terminal receiving the content;
a content reception unit which receives the content corresponding to the user identification information which is sent from a content sending server; and
a forwarding unit which forwards the content received by the content reception unit to the terminal.
